# EUROPEAN PATENT APPLICATION

(11) **EP 4 395 408 A1**
(43) Date of publication of application: **03.07.2024**
(21) Application number: 23156337.0
(22) Date of filing: 13.02.2023
(51) Int. Cl.: H04W 24/10

(54) **TERMINAL APPARATUS, BASE STATION APPARATUS, METHOD, AND INTEGRATED CIRCUIT**

(30) Priority: 27.12.2022 JP 2022209778
(71) Applicant: SHARP Kabushiki Kaisha, Sakai-ku Sakai City Osaka 590-8522 (JP)
(72) Inventor: MIYAKE, Taichi, Sakai City, Osaka 590-8522 (JP); YAMADA, Shohei, Sakai City, Osaka 590-8522 (JP); TSUBOI, Hidekazu, Sakai City, Osaka 590-8522 (JP); KAWANO, Takuma, Sakai City, Osaka 590-8522 (JP); INOUE, Kyosuke, Sakai City, Osaka 590-8522 (JP)
(74) Representative: Müller Hoffmann & Partner

(57) **Abstract**

A terminal apparatus for communicating with a base station apparatus via a relay terminal apparatus determines whether to measure a reference signal received power of some or all of measurement objects based on a reference signal received power of the relay terminal apparatus and a threshold included in a measurement parameter.

## Description

### Technical Field

The present invention relates to a terminal apparatus, a base station apparatus, a method, and an integrated circuit.

### Background Art

In the 3rd Generation Partnership Project (3GPP) that is a standardization project for cellular mobile communication systems, technical study and standardization have been carried out on the cellular mobile communication systems including radio access, core networks, services, and the like.

For example, the 3GPP has started technical study and standardization on Evolved Universal Terrestrial Radio Access (E-UTRA) as a radio access technology (RAT) for cellular mobile communication systems for the 3.9th generation and 4th generation. At present as well, the 3GPP carries out technical study and standardization on extended technologies of E-UTRA. Further, E-UTRA may also be referred to as Long Term Evolution (LTE: registered trademark), and its extended technology may also be referred to as LTE-Advanced (LTE-A) and LTE-Advanced Pro (LTE-A Pro).

In addition, the 3GPP has started technical study and standardization on New Radio or NR Radio access (NR) as a radio access technology (RAT) for cellular mobile communication systems for the 5th generation (5G). At present as well, the 3GPP carries out technical study and standardization on extended technologies of NR.

### Citation List

### Non Patent Literature

NPL 1: 3GPP TS 38.331 v17.0.0, "Evolved Universal Terrestrial Radio Access (E-UTRA); Radio Resource Control (RRC); Protocol specifications", pp 70-116, pp 218-223, pp 316-1107
NPL 2: 3GPP TS 38.321 v17.0.0, "NR; Medium Access Control (MAC) protocol specification", pp 17-104
NPL 3: 3GPP TS 38.213 V17.2.0, "NR; Physical layer procedures for control", pp 14-20

### Summary of Invention

### Technical Problem

The 3GPP has studied, as an extended technique of NR, a technique called sidelink (SL) in which terminal apparatuses directly communicate with each other without going through a core network, a technique called UE-to-Network relay (U2N Relay) in which a relay terminal apparatus provides communication through sidelink and thus a terminal apparatus communicates with a base station apparatus via the relay terminal apparatus, and reinforcement of service continuity in U2N Relay.

One aspect of the present invention has been made in light of the above-described circumstances, and an object of the present invention is to provide a terminal apparatus, a base station apparatus, a method, and an integrated circuit which enable efficient communication control.

### Solution to Problem

In order to accomplish the object described above, an aspect of the present invention is contrived to provide the following means.
(1) A first aspect of the present invention is a terminal apparatus that communicates with a base station apparatus via a relay terminal apparatus, the terminal apparatus including a receiver that receives a measurement parameter configured by the base station apparatus, a measurement unit that measures a reference signal received power of one or more measurement objects based on the measurement parameter, a processor that generates a measurement report message based on the reference signal received power measured by the measurement unit, and a transmitter that transmits the measurement report message to the base station apparatus via the relay terminal apparatus, in which the processor determines whether to measure the reference signal received power of some or all of the one or more measurement objects based on a reference signal received power of the relay terminal apparatus and a threshold included in the measurement parameter.
(2) A second aspect of the present invention is a base station apparatus for communicating with a terminal apparatus via a relay terminal apparatus, the base station apparatus including a processor that generates a measurement parameter of a reference signal received power in sidelink communication, the measurement parameter being configured for the terminal apparatus, and a transmitter that transmits the measurement parameter, in which the processor includes a threshold in the measurement parameter, and the threshold is a threshold for causing the terminal apparatus to determine whether to measure a reference signal received power of some or all of measurement objects based on the reference signal received power of the relay terminal apparatus and the threshold.
(3) A third aspect of the present invention is a method applied to a terminal apparatus for communicating with a base station apparatus via a relay terminal apparatus, the method including a step of receiving a measurement parameter configured by the base station apparatus, a step of measuring a reference signal received power of one or more measurement objects based on the measurement parameter, a step of generating a measurement report message based on the measured reference signal received power, and a step of transmitting the measurement report message to the base station apparatus via the relay terminal apparatus, in which whether to measure the reference signal received power of some or all of the one or more measurement objects is determined based on a reference signal received power of the relay terminal apparatus and a threshold included in the measurement parameter.
(4) A fourth aspect of the present invention is an integrated circuit implemented in a terminal apparatus for communicating with a base station apparatus via a relay terminal apparatus, the integrated circuit causing the terminal apparatus to perform receiving a measurement parameter configured by the base station apparatus, measuring a reference signal received power of one or more measurement objects based on the measurement parameter, generating a measurement report message based on the measured reference signal received power, and transmitting the measurement report message to the base station apparatus via the relay terminal apparatus, in which whether to measure the reference signal received power of some or all of the one or more measurement objects is determined based on a reference signal received power of the relay terminal apparatus and a threshold included in the measurement parameter.

Further, these comprehensive or specific aspects may be realized in a system, an apparatus, a method, an integrated circuit, a computer program, or a recording medium, or may be realized in any combination of the system, apparatus, method, integrated circuit, computer program, and recording medium.

### Advantageous Effects of Invention

According to an aspect of the present invention, a terminal apparatus, a base station apparatus, a method, and an integrated circuit that realize efficient communication control processing can be provided.

### Brief Description of Drawings

FIG. 1 is a schematic diagram of a communication system according to the present embodiment.
FIG. 2 is a diagram illustrating an example of a protocol architecture of NR sidelink communication according to the present embodiment.
FIG. 3 is a diagram illustrating an example of a protocol architecture of NR sidelink communication according to the present embodiment.
FIG. 4 is a diagram illustrating an example of a protocol architecture in a discovery procedure according to the present embodiment.
FIG. 5 is a block diagram illustrating a configuration of a terminal apparatus according to the present embodiment.
FIG. 6 is an example of processing related to measurement according to the present embodiment.
FIG. 7 is an example of processing related to measurement according to the present embodiment.
FIG. 8 is a block diagram illustrating a configuration of a base station apparatus according to the present embodiment.

### Description of Embodiments

The present embodiment will be described below in detail with reference to the drawings.

Further, although names of nodes and entities and processing by the nodes and entities in a case that the radio access technology is NR will be described in the present embodiment, the present embodiment may be applied to other radio access technologies. The name of each node or entity in the present embodiment may vary.

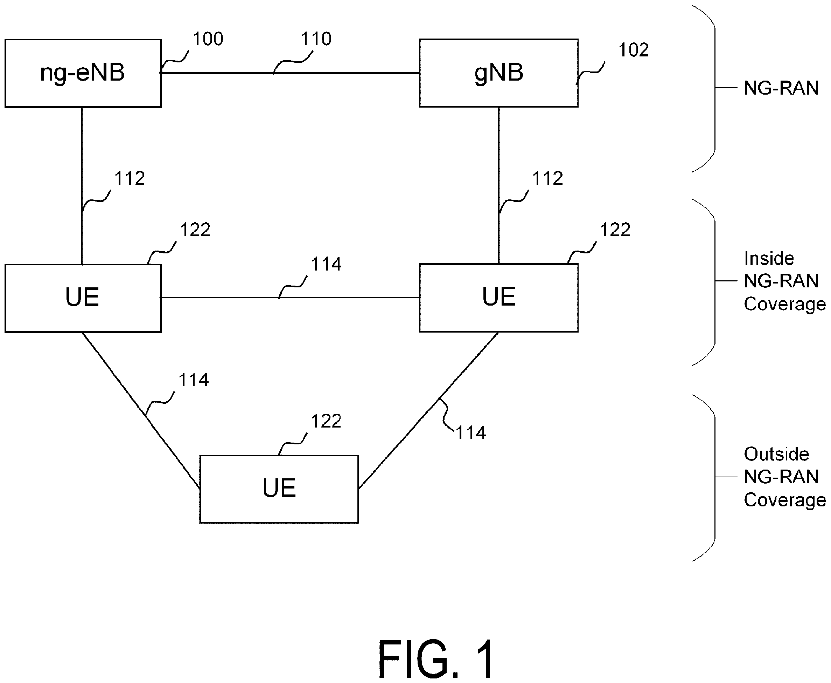

FIG. 1 is a schematic diagram of a communication system according to the present embodiment. Further, the functions of nodes, radio access technologies, core networks, interfaces, and the like described with reference to FIG. 1 are some functions closely related to the present embodiment, and may have other functions.

E-UTRA may be a radio access technology. In addition, E-UTRA may be an air interface between UE 122 and ng-eNB 100. The air interface 112 between the UE 122 and the ng-eNB 100 may be called a Uu interface. The ng E-UTRAN Node B (ng-eNB) 102 may be a base station apparatus of the E-UTRA. The ng-eNB 100 may have an E-UTRA protocol described below. The E-UTRA protocol may include an E-UTRA user plane (UP) protocol to be described later and an E-UTRA control plane (CP) protocol to be described later. The ng-eNB 100 may terminate the E-UTRA user plane protocol and the E-UTRA control plane protocol for the UE 122. A radio access network comprised of eNBs may be called an E-UTRAN.

NR may be a radio access technology. In addition, NR may be an air interface between the UE 122 and an gNB 102. The air interface 112 between the UE 122 and the gNB 102 may be called a Uu interface. The gNode B (gNB) 102 may be a base station apparatus of NR. The gNB 102 may have the NR protocol described below. The NR protocol may include an NR user plane (UP) protocol to be described later and an NR control plane (CP) protocol to be described later. The gNB 102 may terminate the NR user plane protocol and the NR control plane protocol for the UE 122.

Further, an interface 110 between the ng-eNB 100 and the gNB 102 may called an Xn interface. In addition, the ng-eNB and the gNB may be connected to the 5GC via an interface called an NG interface (not illustrated). The 5GC may be a core network. One or more base station apparatuses may connect to the 5GC via an NG interface.

A state in which a connection to a base station apparatus can be made only via a Uu interface may be referred to as inside NG-RAN coverage or in-coverage (IC). In addition, a state in which a connection to a base station apparatus cannot be made only via the Uu interface may be referred to as outside NG-RAN coverage or out-of-coverage (OOC). An air interface 114 between the UE 122 and other UE 122 may be called a PC5 interface. Communication between UE 122 via the PC5 interface may be called sidelink (SL) communication.

Further, in the following description, the ng-eNB 100 and/or the gNB 102 are simply referred to as a base station apparatus, and the UE 122 is also simply referred to as a terminal apparatus or UE. In addition, the PC5 interface is also simply referred to as PC5, and the Uu interface is also simply referred to as Uu.

Sidelink is a technique for performing direct communication between terminal apparatuses, and sidelink transmission and/or reception on the PC5 are performed inside the NG-RAN coverage and outside the NG-RAN coverage.

NR SL communication has three transmission modes, and SL communication is performed in one of the transmission modes paired with a source layer-2 identifier (Source Layer-2 ID) and a destination layer-2 identifier (Destination Layer-2 ID). The source layer-2 identifier and the destination layer-2 identifier may be referred to as a source L2ID and a destination L2ID, respectively. The three transmission modes are "unicast transmission", "groupcast transmission", and "broadcast transmission".

Unicast transmission is characterized by (1) support for one PC5-RRC connection between paired pieces of LTE, (2) transmission and/or reception of control information and user traffic between pieces of UE on sidelink, (3) support for sidelink HARQ feedback, (4) transmitted power control on sidelink, (5) support for RLC AM, and (6) detection of failure in radio link for a PC5-RRC connection.

In addition, groupcast transmission is also characterized by (1) transmission and/or reception of user traffic between pieces of LTE belonging to a sidelink group and (2) support for sidelink HARQ feedback.

In addition, broadcast transmission is characterized by (1) transmission and/or reception of user traffic between pieces of UE on sidelink.

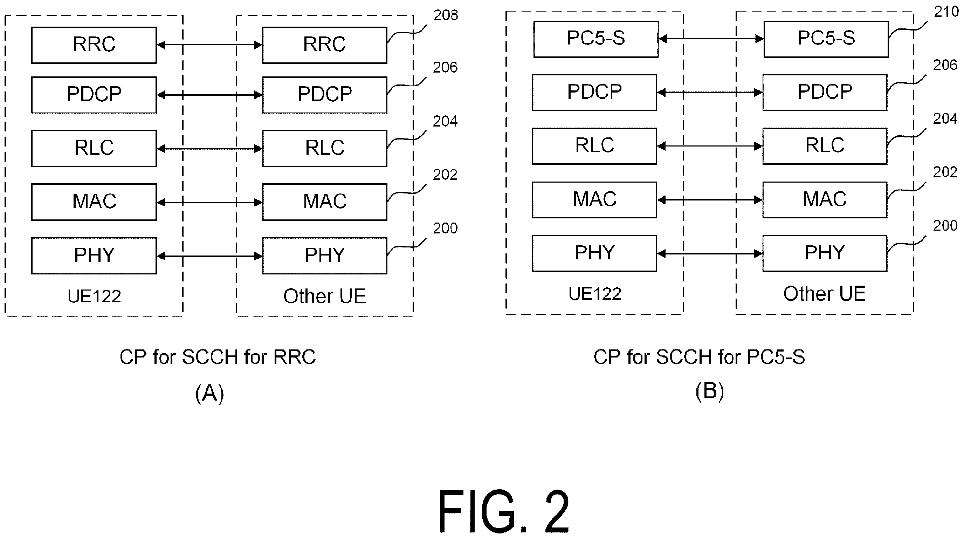

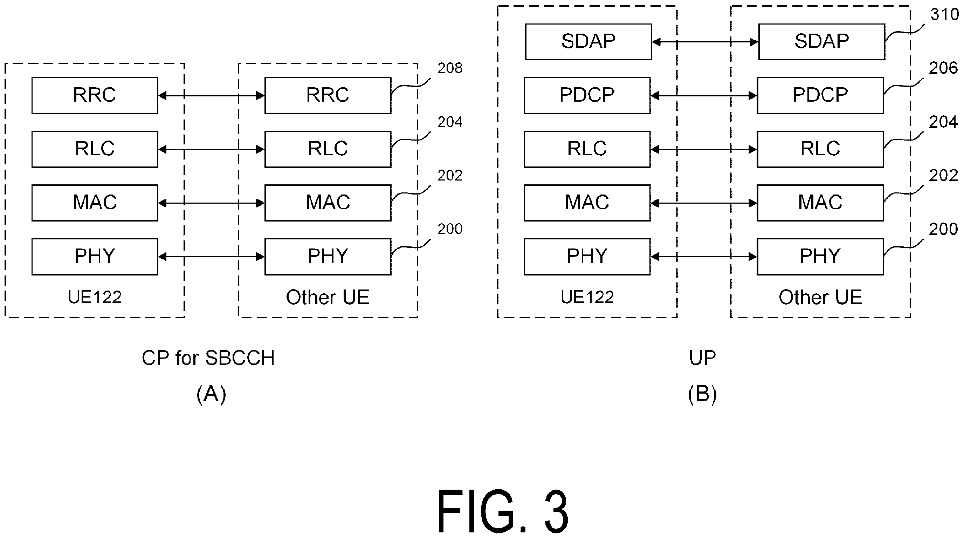

FIGS. 2 and 3 are diagrams illustrating examples of protocol architectures in NR sidelink communication according to the present embodiment. Further, the functions of the protocols described with reference to FIG. 2 and/or FIG. 3 are some functions closely related to the present embodiment, and other functions may be included. Further, in the present embodiment, sidelink (SL) may be a link between terminal apparatuses.

FIG. 2(A) is a diagram of a protocol stack of the control plane (CP) for an SCCH using RRC configured on a PC5 interface. As illustrated in FIG. 2(A), the control plane protocol stack for the SCCH using RRC may include a physical layer (PHY) 200 which is a radio physical layer, medium access control (MAC) 202 which is a medium access control layer, radio link control (RLC) 204 which is a radio link control layer, a packet data convergence protocol (PDCP) 206 which is a packet data convergence protocol layer, and radio resource control (RRC) 208 which is a radio resource control layer. In addition, FIG. 2(B) is a diagram of a protocol stack of the control plane for the SCCH using PC5-S configured on the PC5 interface. As illustrated in FIG. 2(B), the control plane protocol stack for the SCCH using PC5-S may include a physical layer (PHY) 200 which is a radio physical layer, medium access control (MAC) 202 which is a medium access control layer, radio link control (RLC) 204 which is a radio link control layer, a packet data convergence protocol (PDCP) 206 which is a packet data convergence protocol layer, and PC5 signaling (PC5-S) 210 which is a PC5 signaling layer.

FIG. 3(A) is a diagram of a protocol stack of the control plane for the SBCCH configured on the PC5 interface. As illustrated in FIG. 3(A), the control plane protocol stack for the SBCCH may include a physical layer (PHY) 200 that is a radio physical layer, a medium access control (MAC) 202 that is a medium access control layer, radio link control (RLC) 204 that is a radio link control layer, and radio resource control (RRC) 208 that is a radio resource control layer. In addition, FIG. 3(B) is a diagram of a protocol stack of the user plane (UP) for an STCH configured on the PC5 interface. As illustrated in FIG. 3(B), the user plane protocol stack for the STCH may include a physical layer (PHY) 200 which is a radio physical layer, medium access control (MAC) 202 which is a medium access control layer, radio link control (RLC) 204 which is a radio link control layer, a packet data convergence protocol (PDCP) 206 which is a packet data convergence protocol layer, and a service data adaptation protocol (SDAP) 310 that is a service data adaptation protocol layer.

Further, an access stratum (AS) layer may be a layer including some or all of the PHY 200, the MAC 202, the RLC 204, the PDCP 206, the SDAP 310, and the RRC 208. In addition, the PC5-S 210 and Discovery 400 to be described later may be layers higher than the AS layer.

Further, in the present embodiment, terms such as PHY (PHY layer), MAC (MAC layer), RLC (RLC layer), PDCP (PDCP layer), SDAP (SDAP layer), RRC (RRC layer), and PC5-S (PC5-S layer) may be used. In this case, PHY (PHY layer), MAC (MAC layer), RLC (RLC layer), PDCP (PDCP layer), SDAP (SDAP layer), RRC (RRC layer), PC5-S (PC5-S layer) may be PHY (PHY layer), MAC (MAC layer), RLC (RLC layer), PDCP (PDCP layer), SDAP (SDAP layer), RRC (RRC layer), and PC5-S (PC5-S layer) of an NR sidelink protocol, respectively. Further, in a case that sidelink communication is performed using the E-UTRA technique, the SDAP layer may not be provided. Further, in order to make it clear that the protocol is a sidelink protocol, for example, the PDCP may be expressed as a sidelink PDCP or the like, and other protocols may also be expressed as sidelink protocols by prefixing "sidelink" thereto.

In addition, in order to distinguish an E-UTRA protocol from an NR protocol in the present embodiment, the PHY, MAC, RLC, PDCP, and RRC may be respectively referred to as a PHY for E-UTRA or PHY for LTE, MAC for E-UTRA or MAC for LTE, RLC for E-UTRA or RLC for LTE, PDCP for E-UTRA or PDCP for LTE, and RRC for E-UTRA and RRC for LTE. In addition, the PHY, MAC, RLC, PDCP, and RRC may be respectively described as E-UTRA PHY or LTE PHY, E-UTRA MAC or LTE MAC, E-UTRA RLC or LTE RLC, E-UTRA PDCP or LTE PDCP, and E-UTRA RRC or LTE RRC, and the like. In addition, in a case that the E-UTRA protocol is to be distinguished from the NR protocol, the PHY, MAC, RLC, PDCP, and RRC may be referred to as a PHY for NR, MAC for NR, RLC for NR, PDCP for NR, and RRC for NR, respectively. In addition, the PHY, MAC, RLC, PDCP, and RRC may be described as an NR PHY, NR MAC, NR RLC, NR PDCP, NR RRC, and the like, respectively.

Entities in the AS layer of E-UTRA and/or NR will now be described. An entity having some or all of the functions of the physical layer may be referred to as a PHY entity. An entity having some or all of the functions of the MAC layer may be referred to as an MAC entity. An entity having some or all of the functions of the RLC layer may be referred to as an RLC entity. An entity having some or all of the functions of the PDCP layer may be referred to as a PDCP entity. An entity having some or all of the functions of the SDAP layer may be referred to as an SDAP entity. An entity having some or all of the functions of the RRC layer may be referred to as an RRC entity. A PHY entity, an MAC entity, an RLC entity, a PDCP entity, an SDAP entity, and an RRC entity may be rephrased as PHY, MAC, RLC, PDCP, SDAP, and RRC, respectively.

Further, data provided to a lower layer from the MAC, RLC, PDCP, and SDAP and/or data provided from a lower layer to the MAC, RLC, PDCP, and SDAP may be called an MAC protocol data unit (PDU), an RLC PDU, a PDCP PDU, and an SDAP PDU, respectively. In addition, data provided from a higher layer to the MAC, RLC, PDCP, and SDAP, and/or data provided to a higher layer from the MAC, RLC, PDCP, and SDAP may be referred to as an MAC service data unit (SDU), an RLC SDU, a PDCP SDU, and an SDAP SDU, respectively. In addition, a segmented RLC SDU may be referred to as an RLC SDU segment.

Here, the base station apparatus and the terminal apparatus exchange (transmit and/or receive) signals to and/or from each other in a higher layer on the Uu interface. A higher layer may be referred to as an upper layer, and they may be paraphrased with each other. For example, in the radio resource control (RRC) layer, the base station apparatus and the terminal apparatus may transmit and/or receive an RRC message (which is also referred to as RRC signaling). In addition, in a medium access control (MAC) layer, the base station apparatus and the terminal apparatus may transmit and/or receive an MAC control element (MAC CE). In addition, the RRC layer of the terminal apparatus acquires system information broadcast from the base station apparatus. Here, the RRC message, the system information, and/or the MAC control element are also referred to as higher layer signaling or a higher layer parameter. Each of parameters included in the higher layer signaling received by the terminal apparatus may be referred to as a higher layer parameter. For example, since a higher layer in processing of the PHY layer means a higher layer as viewed from the PHY layer, it may mean one or multiple of the MAC layer, the RRC layer, the RLC layer, the PDCP layer, a Non Access Stratum (NAS) layer, or the like. For example, a higher layer in processing of the MAC layer may mean one or multiple of the RRC layer, the RLC layer, the PDCP layer, the NAS layer, or the like.

In addition, terminal apparatuses exchange (transmit and/or receive) signals to and/or from each other in a higher layer on the PC5 interface. For example, in the radio resource control (RRC) layer, terminal apparatuses may transmit and/or receive an RRC message (which is also referred to as RRC signaling). In addition, in a medium access control (MAC) layer, the base station apparatuses and the terminal apparatuses may transmit and/or receive an MAC control element (MAC CE). Here, the RRC message and/or the MAC control element are also referred to as higher layer signaling or a higher layer parameter. Each of parameters included in the higher layer signaling received by the terminal apparatuses may be referred to as a higher layer parameter. For example, since a higher layer in processing of the PHY layer means a higher layer as viewed from the PHY layer, it may mean one or multiple of the MAC layer, the RRC layer, the RLC layer, the PDCP layer, the PC5-S layer, the Discovery layer, or the like. For example, a higher layer in processing of the MAC layer may mean one or multiple of the RRC layer, the RLC layer, the PDCP layer, the PC5-S layer, the Discovery layer, or the like.

Hereinafter, "A is given (provided) in a higher layer" or "A is given (provided) by a higher layer" may mean that a higher layer (mainly the RRC layer, the MAC layer, or the like) of the terminal apparatus receives A from the base station apparatus or another terminal apparatus and the received A is given (provided) from the higher layer of the terminal apparatus to the physical layer of the terminal apparatus. For example, "being provided with a higher layer parameter" to the terminal apparatus may mean that higher layer signaling is received from the base station apparatus or another terminal apparatus and the higher layer parameter included in the received higher layer signaling is provided from the higher layer of the terminal apparatus to the physical layer of the terminal apparatus. Configuring a higher layer parameter to the terminal apparatus may mean that a higher layer parameter is given (provided) to the terminal apparatus. For example, configuring a higher layer parameter to the terminal apparatus may mean that the terminal apparatus receives higher layer signaling from the base station apparatus or another terminal apparatus and configures the received higher layer parameter in the higher layer. However, configuring a higher layer parameter to the terminal apparatus may mean that a pre-given default parameter is configured to the higher layer of the terminal apparatus. To describe transmission of an RRC message from a terminal apparatus to a base station apparatus or another terminal apparatus, the expression that a message is submitted from an RRC entity of the terminal apparatus to a lower layer may be used. "Submitting a message to a lower layer" in a terminal apparatus from an RRC entity may mean that a message is submitted to the PDCP layer. "Submitting a message to a lower layer" in a terminal apparatus from the RRC layer may mean that the message from the RRC is submitted to a PDCP entity corresponding to each SRB (SRBO, SRB 1, SRB2, SRB3, etc.) since the message is transmitted using an SRB. When the RRC entity of the terminal apparatus receives an indication from a lower layer, the lower layer may mean one or more of the PHY layer, MAC layer, RLC layer, PDCP layer, and the like.

An example of the functions of the PHY will be described. The PHY of a terminal apparatus may have a function of transmitting and/or receiving data transmitted through a sidelink (SL) physical channel to and/or from the PHY of another terminal apparatus. The PHY may be connected to the MAC of a higher layer via a transport channel. The PHY may exchange data with the MAC via the transport channel. In addition, the PHY may be provided with data from the MAC via the transport channel. In the PHY, a radio network temporary identifier (RNTI) may be used in order to identify various pieces of control information.

Now, physical channels will be described. Examples of physical channels used in radio communication between a terminal apparatus and other terminal apparatuses include the following physical channels.
Physical sidelink broadcast channel (PSBCH)
Physical sidelink control channel (PSCCH)
Physical sidelink shared channel (PSSCH)
Physical sidelink feedback channel (PSFCH)

The PSBCH may be used to broadcast system information required by the terminal apparatus.

The PSCCH may be used to indicate resources or other transmission parameters for the PSSCH.

The PSSCH may be used to transmit data and control information related to HARQ/CSI feedback to another terminal apparatus.

The PSFCH may be used to carry HARQ feedback to another terminal apparatus.

An example of functions of the MAC will be described. The MAC may be called an MAC sublayer. The MAC may have a function of mapping various logical channels to corresponding transport channels. The logical channels may be identified with a logical channel identifier (logical channel identity, or logical channel ID). The MAC may be connected to the RLC of a higher layer via a logical channel. The logical channels may be classified into a control channel for transmitting control information and a traffic channel for transmitting user information depending on the type of information to be transmitted. The MAC may have a function of multiplexing MAC SDUs belonging to one or more different logical channels and providing the multiplexed MAC SDUs to the PHY. In addition, the MAC may have a function of demultiplexing an MAC PDU provided from the PHY and providing the demultiplexed MAC PDU to a higher layer through a logical channel to which each MAC SDU belongs. Furthermore, the MAC may have a function of performing error correction through a hybrid automatic repeat request (HARQ). In addition, the MAC may also have a function of reporting scheduling information. The MAC may have a function of performing priority processing between terminal apparatuses by using dynamic scheduling. In addition, the MAC may have a function of performing priority processing between logical channels within one terminal apparatus. The MAC may have a function of performing priority processing of overlapping resources within one terminal apparatus. E-UTRA MAC may have a function of identifying multimedia broadcast multicast services (MBMS). In addition, NR MAC may have the function of identifying multicast and broadcast services (MBS). The MAC may have a function of selecting a transport format. The MAC may have a function of performing discontinuous reception (DRX) and/or discontinuous transmission (DTX), a function of performing a random access (RA) procedure, a power headroom report (PHR) function of giving notification of information about transmittable power, a buffer status report (BSR) function of giving notification of information about a data amount of a transmission buffer, and the like. The NR MAC may have a bandwidth adaptation (BA) function. In addition, an MAC PDU format used in the E-UTRA MAC may be different from an MAC PDU format used in the NR MAC. In addition, the MAC PDU may include an MAC control element (MAC CE) which is an element for performing control over the MAC.

In addition, an MAC sublayer may additionally provide services and functions on the PC5 interface, such as radio resource selection for selecting radio resources to perform sidelink transmission, filtering of packets received in sidelink communication, priority processing between uplink and sidelink, sidelink channel state information (sidelink CSI) reporting, etc.

Sidelink (SL) logical channels used in E-UTRA and/or NR and mapping of sidelink logical channels to transport channels will be described.

A sidelink broadcast control channel (SBCCH) may be a sidelink logical channel for broadcasting sidelink system information from one terminal apparatus to one or a plurality of terminal apparatuses. In addition, the SBCCH may also be mapped to a sidelink transport channel, SL-BCH.

A sidelink control channel (SCCH) may be a sidelink logical channel for transmitting control information such as a PC5-RRC message or a PC5-S message from one terminal apparatus to one or a plurality of terminal apparatuses. In addition, the SCCH may be mapped to a sidelink transport channel, SL-SCH.

A sidelink traffic control channel (STCH) may be a sidelink logical channel for transmitting user information from one terminal apparatus to one or a plurality of terminal apparatuses. In addition, the STCH may be mapped to a sidelink transport channel, SL-SCH.

An example of functions of the RLC will be described. The RLC may be called an RLC sublayer. The E-UTRA RLC may have a function of segmenting and/or concatenating data provided from the PDCP of a higher layer and providing the data to a lower layer. The E-UTRA RLC may have a function of performing reassembling and re-ordering data provided from a lower layer and providing the data to a higher layer. The NR RLC may have a function of giving a sequence number independent of the sequence number added by the PDCP of a higher layer to the data provided from the PDCP. In addition, the NR RLC may have a function of segmenting data provided from the PDCP and providing the data to a lower layer. In addition, the NR RLC may have a function of reassembling data provided from a lower layer and providing the data to a higher layer. In addition, the RLC may have a data retransmission function and/or a retransmission request function (automatic repeat request or ARQ). In addition, the RLC may have a function of performing error correction by using ARQ. Control information indicating data that needs to be retransmitted, which is transmitted from the reception side to the transmission side of the RLC in order to perform ARQ, may be referred to as a status report. In addition, an indication of transmission of status report transmitted from the transmission side to the reception side of the RLC may be referred to as a poll. In addition, the RLC may have a function of detecting data duplication. In addition, the RLC may have a function of data discard. The RLC may have three modes of a transparent mode (TM), an unacknowledged mode (UM), and an acknowledged mode (AM). In the TM, data received from a higher layer is not segmented, and no RLC header may not be added. A TM RLC entity is a uni-directional entity and may be configured as a transmitting TM RLC entity or a receiving TM RLC entity. Although data received from a higher layer is segmented and/or concatenated, an RLC header is added, and the like in the UM, retransmission control of data may not be performed. A UM RLC entity may be a uni-directional entity or a bi-directional entity. In a case that a UM RLC entity is a uni-directional entity, the UM RLC entity may be configured as a transmitting UM RLC entity or a receiving UM RLC entity. In a case that a UM RLC entity is a bi-directional entity, the UM RRC entity may be configured as a UM RLC entity configured in a transmitting side and a receiving side. In the AM, data received from a higher layer may be segmented and/or concatenated, an RLC header may be added, retransmission control of data may be performed, and the like. An AM RLC entity is a bi-directional entity and may be configured as an AM RLC configured in a transmitting side and a receiving side. Further, data provided to a lower layer and/or data provided from a lower layer in the TM may be called a TMD PDU. In addition, data provided to a lower layer and/or data provided from a lower layer in the UM may be called a UMD PDU. In addition, data provided to a lower layer and/or data provided from a lower layer in the AM may be called a AMD PDU. An RLC PDU format used in the E-UTRA RLC may be different from an RLC PDU format used in the NR RLC. In addition, the RLC PDU may include a data RLC PDU and a control RLC PDU. The data RLC PDU may be called an RLC data PDU. In addition, control RLC PDU may be called an RLC control PDU.

Further, in sidelink, the TM may be used for an SBCCH, only the UM is used in groupcast transmission and broadcast transmission, and the UM and AM can be used in unicast transmission. In addition, in sidelink, the UM in groupcast transmission and broadcast transmission supports only uni-directional transmission.

An example of functions of the PDCP will be described. The PDCP may be called a PDCP sublayer. The PDCP may have a function of maintaining sequence numbers. In addition, the PDCP may have a header compression/decompression function for efficiently transmitting user data such as IP packets, Ethernet frames, and the like over a radio section. A protocol used for header compression/decompression of an IP packet may be called a robust header compression (ROHC) protocol. In addition, a protocol used for Ethernet (registered trademark) frame header compression/decompression may be called an Ethernet Header Compression (EHC) protocol. In addition, the PDCP may have a data encryption/decryption function. In addition, the PDCP may have a data integrity protection/integrity verification function. In addition, the PDCP may have a re-ordering function. In addition, the PDCP may have a PDCP SDU retransmission function. In addition, the PDCP may have a function of discarding data using a discard timer. In addition, the PDCP may have a multiplexing (duplication) function. In addition, the PDCP may have a function of discarding redundantly received data. A PDCP entity is a bi-directional entity and may be configured of a transmitting PDCP entity and a receiving PDCP entity. In addition, a PDCP PDU format used in the E-UTRA PDCP may be different from a PDCP PDU format used in the NR PDCP. In addition, the PDCP PDU may include a data PDCP PDU and a control PDCP PDU. The data PDCP PDU may be called an PDCP data PDU. In addition, the control PDCP PDU may be called a PDCP control PDU.

Further, in sidelink, there are following restrictions on the functions and services of the PDCP.
(1) Out-of-order delivery may be supported only by unicast transmission.
(2) Multiplexing on the PC5 interface is not supported.

An example of functions of the SDAP will be described. The SDAP is a service data adaptation protocol layer. In sidelink, the SDAP may have a function of mapping a sidelink QoS flow transmitted from a terminal apparatus to another terminal apparatus to a sidelink data radio bearer (DRBs). In addition, the SDAP may have a function of storing mapping rule information. In addition, the SDAP may have a function of marking a QoS flow identifier (QoS Flow ID or QFI). Further, examples of SDAP PDU may include a SDAP PDU for data and a SDAP PDU for control. The SDAP PDU for data may be called an SDAP data PDU. In addition, the SDAP PDU for control may be called a SDAP control PDU. Further, in sidelink, there may be one SDAP entity of a terminal apparatus per destination in any one of unicast transmission, groupcast transmission, and broadcast transmission associated with the destination. In addition, reflective QoS is not supported on the PC5 interface.

An example of functions of the RRC will be described. The RRC may support services and functions on the PC5 interface, such as forwarding of PC5-RRC messages between peer pieces of UE, maintenance and release ofPC5-RRC connections between two pieces of UE, and detection of sidelink radio link failure for PC5-RRC connections. A PC5-RRC connection is considered to be a logical connection between two pieces of LTE corresponding to a pair of a source L2ID and a destination L2ID and established after a corresponding PC5 unicast link is established. In addition, a PC5-RRC connection corresponds to the PC5 unicast link one-to-one. In addition, UE may have multiple PC5-RRC connections for one or multiple pieces of UE for different pairs of source L2ID and destination L2ID. A separate PC5-RRC procedure and message may be used for LTE to transfer UE capability and sidelink configuration to peer UE. In addition, both of peer UE may exchange their UE capabilities and sidelink configurations with each other using separate bi-directional procedures. In a case that sidelink transmission is not of interest, a case that sidelink radio link failure is detected for a PC5-RRC connection, and a case that the layer 2 link release procedure is completed, the LTE releases the PC5-RRC connection.

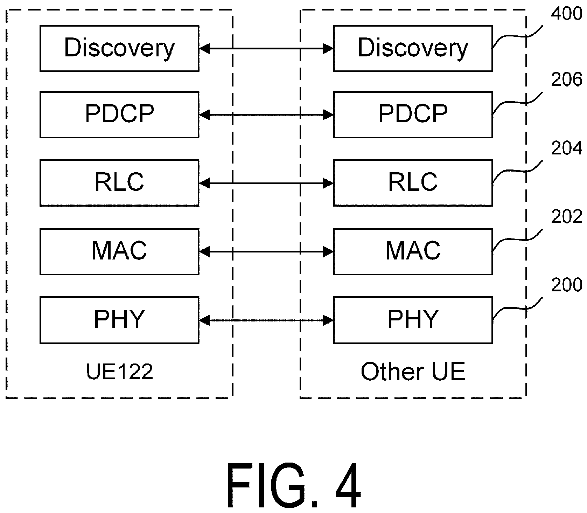

A terminal apparatus capable of performing sidelink communication may perform discovery. The discovery may include Model A and Model B. FIG. 4 illustrates a protocol stack in a discovery procedure. Model A may use a single discovery protocol message and Model B may use two discovery protocol messages. A single discovery protocol message in Model A may be an announcement message, and a discovery protocol message in Model B may be a solicitation message and a response message. An outline of the procedures of Model A and Model B in ProSe Direct Discovery will be described below.

In Model A, LTE that transmits an announcement message may be referred to as announcing LTE, and LTE that monitors an announcement message may be referred to as monitoring UE. An announcement message may include information such as a discovery message type, a ProSe application code or a ProSe restricted code, or a security protection element, and may further include metadata information. The announcement message is transmitted by using a destination layer-2 ID (L2ID) and a source layer-2 ID (L2ID), and the monitoring UE determines the destination L2ID to receive the announcement message. Further, the destination L2ID may be a layer-2 identifier of the destination UE, and the source L2ID may be a layer-2 identifier of the source UE. The destination UE may be simply referred to as a destination.

In Model B, UE that transmit an invitation message may be referred to as discoverer UE, and UE that receives an invitation message and/or UE that transmits a response message to discoverer UE may be referred to as discoveree UE. The invitation message may include information such as the type of the discovery message, a ProSe query code, and a security protection element. The invitation message is transmitted by using a destination L2ID and a source L2ID, and the discoveree LTE determines the destination L2ID to receive an invitation message. In addition, the discoveree UE responding to the invitation message transmits a response message. The response message may include information such as the type of the discovery message, a ProSe response code, or a security protection element, and may further include metadata information. The response message is transmitted using the source L2ID, and the destination L2ID is set for the source L2ID of the received invitation message.

In discovery, there may be a type other than ProSe Direct Discovery in which another LTE is discovered in order to perform direct communication with the other LTE, and group member discovery in which one or more pieces of UE are discovered in order to perform communication within a group using sidelink, 5G ProSe UE-to-Network Relay Discovery in which candidate relay UE is discovered in order to connect to a network via relay UE, and the like. Further, although the above-described types of discovery are examples of discovery provided by an application called ProSe, in addition to the above-described types, different types of discovery may be present according to an application or service to perform sidelink communication. In addition, information included in the discovery protocol message may vary according to the type of discovery, and an additional message may be transmitted to transmit additional information.

FIG. 4 is a diagram illustrating an example of a protocol architecture including a discovery protocol according to the present embodiment. As illustrated in FIG. 4, the control plane protocol stack for the SBCCH may include a physical layer (PHY) 200 that is a radio physical layer, a medium access control (MAC) 202 that is a medium access control layer, radio link control (RLC) 204 that is a radio link control layer, and discovery 400 that is a discovery protocol layer. The discovery 400 may be a protocol used to handle procedures related to discovery. In addition, an interface between pieces of UE that perform discovery may be referred to as PC5-D.

A plurality of resource pools for transmitting a discovery message may be configured, and one or multiple resource pools may be configured only for discovery. In a case that a discovery-dedicated resource pool is configured, the UE may use the discovery-dedicated resource pool as a resource pool for transmitting a discovery message, and in a case that no discovery-dedicated resource pool is configured, the UE may use a resource pool for sidelink communication as a resource pool for transmitting a discovery message. Further, multiple resource pools for sidelink communication and resource pools dedicated to discovery may be configured at the same time. Each resource pool may be configured by UE-dedicated signaling or may be configured in advance.

In each unicast PC5-RRC connection, a sidelink signaling radio bearer (SRB) may be configured. A sidelink SRB used to transmit a PC5-S message before PC5-S security is established may be referred to as SL-SRB0. In addition, a sidelink SRB used to transmit a PC5-S message before to establish PC5-S security may be referred to as SL-SRB 1. In addition, a sidelink SRB used to transmit a protected PC5-S message after PC5-S security is established may be referred to as SL-SRB2. In addition, a sidelink SRB used to transmit protected PC5-RRC signaling after PC5-S security is established may be referred to as SL-SRB3. In addition, a sidelink SRB used to transmit and/or receive a discovery message in NR may be referred to as SL-SRB4. Further, PC5-RRC signaling may be RRC signaling between LTE, which is transmitted and/or received on PC5.

Here, UE-to-Network (U2N) relay will be described. The U2N relay may be a function of providing connectivity to a network for a remote terminal apparatus (remote UE). The remote terminal apparatus that connects to a network by using a U2N relay may be referred to as U2N remote LTE. In addition, a terminal apparatus that provides network connectivity to the U2N remote UE may be referred to as a U2N relay terminal apparatus (relay UE), or simply as a relay terminal apparatus (relay UE). The U2N relay UE may use the Uu interface for communication with the base station apparatus, and may use a PC5 interface in communication with the U2N remote UE. In addition, for the U2N relay, there may be a layer-2 (L2) U2N relay, a layer-3 (L3) U2N relay, and the like. A remote terminal apparatus in the L2 U2N relay may be specifically referred to as L2 U2N remote UE, and a relay terminal apparatus in the L2 U2N relay may be specifically referred to as L2 U2N relay LTE. In addition, in the L2 U2N relay, there may be a sidelink relay adaptation protocol (SRAP) layer.

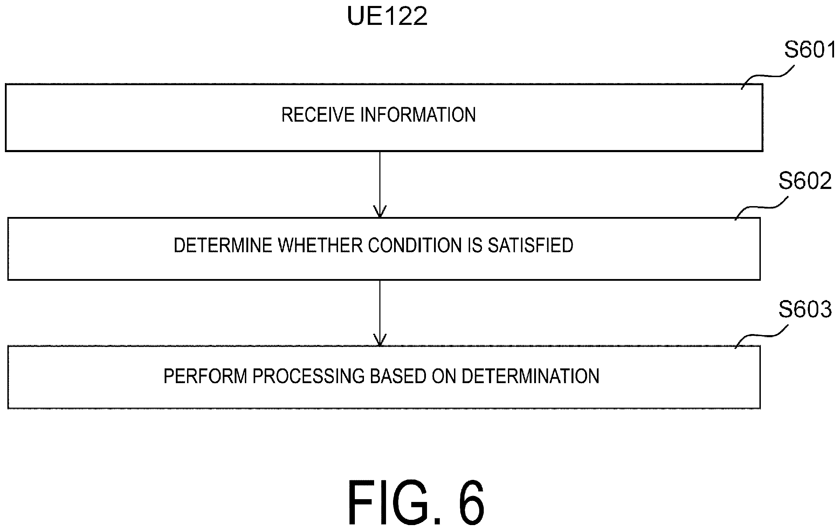

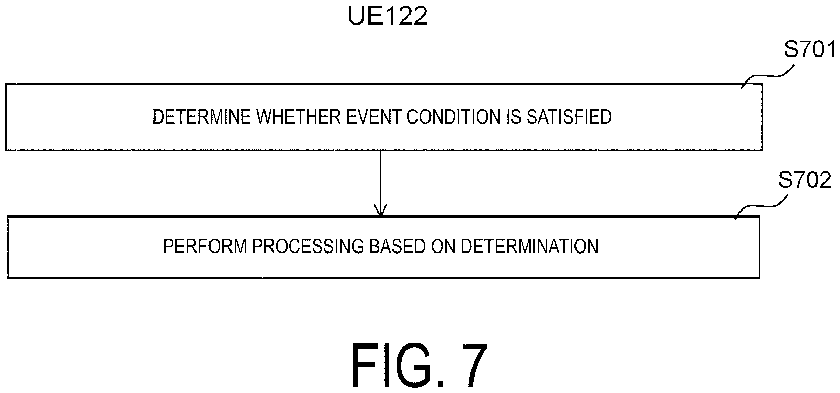

FIG. 6 is a diagram illustrating an example of a protocol architecture of a control plane (C-plane) including an SRAP layer according to the present embodiment. In addition, FIG. 7 is a diagram illustrating an example of a protocol architecture of a user plane (U-plane) including an SRAP layer according to the present embodiment. As illustrated in FIGS. 6 and 7, the SRAP layer may be associated between remote UE and relay UE, and may also be associated between the relay UE and the gNB 102. Further, the gNB 102 illustrated in FIGS. 6 and 7 may be the ng-eNB 100. In addition, the remote UE or the relay UE may be the UE 122. In addition, the relay UE may have the same configuration as the UE 122.

Now, the SRAP will be described. The SRAP sublayer may be above the RLC sublayer for the control and user planes of both the PC5 and Uu interfaces. The SRAP sublayer on the PC5 may be used for the purpose of bearer mapping. For the L2 U2N Relay UE, the SRAP sublayer may include one SRAP entity on the Uu interface, and may include a SRAP entity separate-collocated on the PC5 interface. For the L2 U2N remote UE, the SRAP sublayer may include only one SRAP entity on the PC5 interface. An SRAP entity associated between the remote LTE and the relay LTE via the PC5 interface may be specifically referred to as PC5-SRAP, and an SRAP entity associated between the relay UE and the gNB via the Uu interface may be specifically referred to as Uu-SRAP. Each SRAP entity may have a transmitter and a receiver. On the PC5 interface, the transmitter of the SRAP entity of the L2 U2N remote UE may be associated with the receiver of the SRAP entity of the L2 U2N relay UE, and the receiver of the SRAP entity of the L2 U2N remote UE may be associated with the transmitter of the SRAP entity of the L2 U2N relay UE. In addition, on the Uu interface, the transmitter of the SRAP entity of the L2 U2N relay UE may be associated with the receiver of the SRAP entity of the gNB 102, and the receiver of the SRAP entity of the L2 U2N relay UE may be associated with the transmitter of the SRAP entity of the gNB 102.

In addition, the SRAP entity may have the functions of forwarding data, determining the UE ID and bearer ID fields of the SRAP header to be added to a data packet, determining an egress link, and determining an egress RLC channel.

In addition, in FIGS. 6 and 7, a PC5 relay RLC channel may be configured between the remote UE and the relay UE, and a Uu relay RLC channel may be configured between the relay UE and the gNB 102.

Next, a protocol architecture used between a base station apparatus and a terminal apparatus will be described. In communication performed on the Uu interface between a relay terminal apparatus and a base station apparatus, and communication performed between a remote terminal apparatus and a base station apparatus via a relay terminal apparatus, a protocol used between the base station apparatus and the terminal apparatus may be used. Further, in the communication performed between the remote terminal apparatus and the base station apparatus via the relay terminal apparatus, some of the protocol may not be associated with the remote terminal apparatus and the base station apparatus.

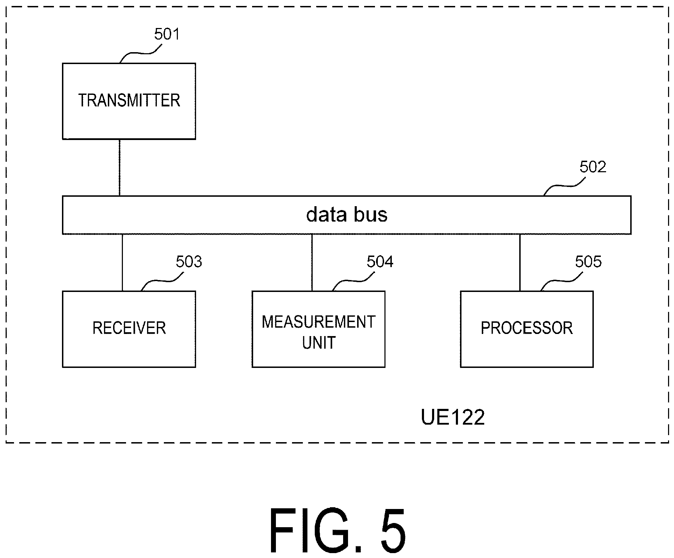

FIG. 5 is a diagram illustrating an example of an NR protocol architecture according to the present embodiment. Functions of the protocols described with reference to FIG. 5 are some functions closely related to the present embodiment, and other functions may be included. Further, in the present embodiment, uplink (UL) may be a link from a terminal apparatus to a base station apparatus. In addition, in the present embodiment, downlink (DL) may be a link from a base station apparatus to a terminal apparatus.

FIG. 5(A) is a diagram illustrating an NR control plane (CP) protocol stack. As illustrated in FIG. 5(A), the NR CP protocol may be a protocol between the UE 122 and the gNB 102. That is, the NR CP protocol may be a protocol for termination at the gNB 102 on the network side. As illustrated in FIG. 5(A), the NR control plane protocol stack may include a physical layer (PHY) 500 which is a radio physical layer, medium access control (MAC) 502 which is a medium access control layer, radio link control (RLC) 504 which is a radio link control layer, a packet data convergence protocol (PDCP) 506 which is a packet data convergence protocol layer, and radio resource control (RRC) 508 which is a radio resource control layer. In addition, FIG. 5(B) is a diagram illustrating an NR user plane (UP) protocol stack. As illustrated in FIG. 5(B), the NR UP protocol may be a protocol between the UE 122 and the gNB 102. That is, the NR UP protocol may be a protocol for termination at the gNB 102 on the network side. As illustrated in FIG. 5(B), the NR user plane protocol stack may include PHY 500 which is a radio physical layer, MAC 502 which is a medium access control layer, RLC 504 which is a radio link control layer, a PDCP 506 which is a packet data convergence protocol layer, and a service data adaptation protocol (SDAP) 510 that is a service data adaptation protocol layer.

Further an access stratum (AS) layer may be a layer that terminates between the UE 122 and the gNB 102. That is, the AS layer may be a layer including some or all of the PHY 500, the MAC 502, the RLC 504, the PDCP 506, and the RRC 508. In addition, the gNB 102 may be the ng-eNB 100. In addition, although only the NR protocol is shown, the E-UTRA protocol may be used. In the E-UTRA protocol, the SDAP 510 may not be present, and the E-UTRA protocol may have some different functions from the NR protocol.

Further, in the present embodiment, terms such as PHY (PHY layer), MAC (MAC layer), RLC (RLC layer), PDCP (PDCP layer), and RRC (RRC layer), may be used without distinguishing the E-UTRA protocol from the NR protocol below. In this case, PHY (PHY layer), MAC (MAC layer), RLC (RLC layer), PDCP (PDCP layer), and RRC (RRC layer) may be PHY (PHY layer), MAC (MAC layer), RLC (RLC layer), PDCP (PDCP layer), and RRC (RRC layer) of the E-UTRA protocol, and PHY (PHY layer), MAC (MAC layer), RLC (RLC layer), PDCP (PDCP layer), and RRC (RRC layer) of the NR protocol, respectively. In addition, the SDAP (SDAP layer) may be the SDAP (SDAP layer) of the NR protocol.

In addition, in order to distinguish the E-UTRA protocol from the NR protocol in the present embodiment below, the PHY 500, the MAC 502, the RLC 504, the PDCP 506, and the RRC 508 may be respectively called PHY for E-UTRA or PHY for LTE, MAC for E-UTRA or MAC for LTE, RLC for E-UTRA or RLC for LTE, PDCP for E-UTRA or PDCP for LTE, and RRC for E-UTRA and RRC for LTE. In addition, the PHY 500, the MAC 502, the RLC 504, the PDCP 506, and the RRC 508 may be respectively described as E-UTRA PHY or LTE PHY, E-UTRA MAC or LTE MAC, E-UTRA RLC or LTE RLC, E-UTRA PDCP or LTE PDCP, and E-UTRA RRC or LTE RRC, and the like. In addition, in a case that the E-UTRA protocol is to be distinguished from the NR protocol, the PHY 500, the MAC 502, the RLC 504, the PDCP 506, and the RRC 508 may be called PHY for NR, MAC for NR, RLC for NR, PDCP for NR, and RRC for NR, respectively. In addition, the PHY 500, the MAC 502, the RLC 504, the PDCP 506, and the RRC 508 may be described as NR PHY, NR MAC, NR RLC, NR PDCP, NR RRC, and the like, respectively.

Entities in the AS layer of E-UTRA and/or NR will now be described. An entity having some or all of the functions of the physical layer may be referred to as a PHY entity. An entity having some or all of the functions of the MAC layer may be referred to as an MAC entity. An entity having some or all of the functions of the RLC layer may be referred to as an RLC entity. An entity having some or all of the functions of the PDCP layer may be referred to as a PDCP entity. An entity having some or all of the functions of the SDAP layer may be referred to as an SDAP entity. An entity having some or all of the functions of the RRC layer may be referred to as an RRC entity. A PHY entity, an MAC entity, an RLC entity, a PDCP entity, an SDAP entity, and an RRC entity may be rephrased as PHY, MAC, RLC, PDCP, SDAP, and RRC, respectively.

Further, data provided to a lower layer from the MAC, RLC, PDCP, and SDAP and/or data provided from a lower layer to the MAC, RLC, PDCP, and SDAP may be called an MAC protocol data unit (PDU), an RLC PDU, a PDCP PDU, and an SDAP PDU, respectively. In addition, data provided from a higher layer to the MAC, RLC, PDCP, and SDAP, and/or data provided to a higher layer from the MAC, RLC, PDCP, and SDAP may be referred to as an MAC service data unit (SDU), an RLC SDU, a PDCP SDU, and an SDAP SDU, respectively. In addition, a segmented RLC SDU may be referred to as an RLC SDU segment.

Here, the base station apparatus and the terminal apparatus exchange (transmit and/or receive) signals with each other in a higher layer. A higher layer may be referred to as an upper layer, and they may be paraphrased with each other. For example, in the radio resource control (RRC) layer, the base station apparatus and the terminal apparatus may transmit and/or receive an RRC message (which is also referred to as RRC signaling). In addition, the base station apparatus and the terminal apparatus may transmit and/or receive a medium access control (MAC) control element in the medium access control (MAC) layer. In addition, the RRC layer of the terminal apparatus acquires system information broadcast from the base station apparatus. Here, the RRC message, the system information, and/or the MAC control element are also referred to as higher layer signaling or a higher layer parameter. Each of parameters included in the higher layer signaling received by the terminal apparatuses may be referred to as a higher layer parameter. For example, since a higher layer in processing of the PHY layer means a higher layer as viewed from the PHY layer, it may mean one or multiple of the MAC layer, the RRC layer, the RLC layer, the PDCP layer, a Non Access Stratum (NAS) layer, or the like. For example, a higher layer in processing of the MAC layer may mean one or multiple of the RRC layer, the RLC layer, the PDCP layer, the NAS layer, or the like.

Hereinafter, "A is given (provided) in a higher layer" or "A is given (provided) by a higher layer" may mean that a higher layer (mainly the RRC layer, the MAC layer, or the like) of the terminal apparatus receives A from the base station apparatus and the received A is given (provided) from the higher layer of the terminal apparatus to the physical layer of the terminal apparatus. For example, "being provided with a higher layer parameter" to the terminal apparatus may mean that higher layer signaling is received from the base station apparatus and the higher layer parameter included in the received higher layer signaling is provided from the higher layer of the terminal apparatus to the physical layer of the terminal apparatus. Configuring a higher layer parameter to the terminal apparatus may mean that a higher layer parameter is given (provided) to the terminal apparatus. For example, configuring a higher layer parameter to the terminal apparatus may mean that the terminal apparatus receives higher layer signaling from the base station apparatus and configures the received higher layer parameter in the higher layer. However, configuring a higher layer parameter to the terminal apparatus may mean that a pre-given default parameter is configured to the higher layer of the terminal apparatus. To describe transmission of an RRC message from the terminal apparatus to the base station apparatus, the expression that a message is submitted from an RRC entity of the terminal apparatus to a lower layer may be used. "Submitting a message to a lower layer" in a terminal apparatus from an RRC entity may mean that a message is submitted to the PDCP layer. "Submitting a message to a lower layer" in a terminal apparatus from the RRC layer may mean that the message from the RRC is submitted to a PDCP entity corresponding to each SRB (SRBO, SRB1, SRB2, SRB3, etc.) since the message is transmitted using an SRB. When the RRC entity of the terminal apparatus receives an indication from a lower layer, the lower layer may mean one or more of the PHY layer, MAC layer, RLC layer, PDCP layer, and the like.

An example of the functions of the PHY will be described. The PHY of the terminal apparatus may have a function of receiving data transmitted from the PHY of the base station apparatus via a downlink (DL) physical channel. The PHY of the terminal apparatus may have a function of transmitting data to the PHY of the base station apparatus via an uplink (UL) physical channel. The PHY may be connected to the MAC of a higher layer via a transport channel. The PHY may exchange data with the MAC via the transport channel. In addition, the PHY may be provided with data from the MAC via the transport channel. In the PHY, a radio network temporary identifier (RNTI) may be used in order to identify various pieces of control information.

Now, physical channels will be described. Examples of physical channels used in radio communication between the terminal apparatus and the base station apparatus may include the following physical channels.
Physical broadcast channel (PBCH)
Physical downlink control channel (PDCCH)
Physical downlink shared channel (PDSCH)
Physical uplink control channel (PUCCH)
Physical uplink shared channel (PUSCH)
Physical random access channel (PRACH)

The PBCH may be used to broadcast system information required by the terminal apparatus.

In addition, the PBCH may be used to broadcast time indexes (SSB-Indexes) within the cycle of synchronization signal blocks (SSB) in NR.

The PDCCH may be used to transmit (or carry) downlink control information (DCI) in downlink radio communication (radio communication from the base station apparatus to the terminal apparatus). Here, one or multiple pieces of DCI (which may also be referred to as DCI formats) may be defined for transmission of downlink control information. In other words, a field for the downlink control information may be defined as DCI and mapped to information bits. The PDCCH may be transmitted in a PDCCH candidate. The terminal apparatus may monitor a set of PDCCH candidates in a serving cell. Monitoring of a set of PDCCH candidates may mean that decoding of the PDCCH is attempted in a certain DCI format. In addition, the terminal apparatus may monitor the PDCCH candidates in monitoring occasions configured in one or more configured control resource sets (CORESET) configured in a search space configuration. The certain DCI format may be used for scheduling of the PUSCH in the serving cell. The PUSCH may be used for transmission of user data, transmission of RRC messages, which will be described below, and the like.

PDCCH repetition may be operated by using two search space sets explicitly linked by a configuration provided by a higher layer (RRC layer). In addition, the two linked search space sets may be associated with a corresponding CORESET. For PDCCH repetition, two linked search space sets may be configured for the terminal apparatus together with the same number of PDCCH candidates. Two PDCCH candidates in two linked search space sets may be linked by the same candidate index. When PDCCH repetition is scheduled to the terminal apparatus, inter-slot repetition may be allowed, and each repetition operation may have the same number of control channel elements (CCEs), coded bits and the same DCI payload.

The PUCCH may be used to transmit uplink control information (UCI) in uplink radio communication (radio communication from the terminal apparatus to the base station apparatus). Here, the uplink control information may include channel state information (CSI) used to indicate a downlink channel state. In addition, the uplink control information may include a scheduling request (SR) used to request uplink shared channel (UL-SCH) resources. In addition, the uplink control information may include a hybrid automatic repeat request acknowledgement (HARQ-ACK).

The PDSCH may be used to transmit downlink data (downlink shared channel or DL-SCH) from the MAC layer. In addition, the PDSCH may be used in downlink to transmit system information (SI), a random access response (RAR), and the like.

The PUSCH may be used to transmit uplink data (uplink shared channel or UL-SCH) from the MAC layer or to transmit a HARQ-ACK and/or CSI along with the uplink data. In addition, the PUSCH may be used to transmit CSI only or a HARQ-ACK and CSI only. In other words, the PUSCH may be used to transmit UCI only. In addition, the PDSCH or PUSCH may be used to transmit RRC message and a MAC CE, which will be described below. Here, in the PDSCH, an RRC message transmitted from the base station apparatus may be signaling common to multiple terminal apparatuses within a cell. In addition, the RRC message transmitted from the base station apparatus may be dedicated signaling to a certain terminal apparatus. In other words, terminal apparatus-specific (LTE-specific) information may be transmitted by using dedicated signaling to a certain terminal apparatus. In addition, the PUSCH may be used to transmit UE capability in uplink.

The PRACH may be used to transmit a random access preamble. The PRACH may be used to indicate an initial connection establishment procedure, a handover procedure, a connection re-establishment procedure, synchronization (timing adjustment) with uplink transmission, and a request for UL-SCH resources.

An example of functions of the MAC will be described. The MAC may be called an MAC sublayer. The MAC may have a function of mapping various logical channels to corresponding transport channels. The logical channels may be identified with a logical channel identifier (logical channel identity, or logical channel ID). The MAC may be connected to the RLC of a higher layer via a logical channel. The logical channels may be classified into a control channel for transmitting control information and a traffic channel for transmitting user information depending on the type of information to be transmitted. In addition, the logical channels may be divided into uplink logical channel and downlink logical channels. The MAC may have a function of multiplexing MAC SDUs belonging to one or more different logical channels and providing the multiplexed MAC SDUs to the PHY. In addition, the MAC may have a function of demultiplexing an MAC PDU provided from the PHY and providing the demultiplexed MAC PDU to a higher layer through a logical channel to which each MAC SDU belongs. Furthermore, the MAC may have a function of performing error correction through a hybrid automatic repeat request (HARQ). In addition, the MAC may also have a function of reporting scheduling information. The MAC may have a function of performing priority processing between terminal apparatuses by using dynamic scheduling. In addition, the MAC may have a function of performing priority processing between logical channels within one terminal apparatus. The MAC may have a function of performing priority processing of overlapping resources within one terminal apparatus. The E-UTRA MAC may have a function of identifying multimedia broadcast multicast services (MBMS). In addition, NR MAC may have the function of identifying multicast and broadcast services (MBS). The MAC may have a function of selecting a transport format. The MAC may have a function of performing discontinuous reception (DRX) and/or discontinuous transmission (DTX), a function of performing a random access (RA) procedure, a power headroom report (PHR) function of giving notification of information about transmittable power, a buffer status report (BSR) function of giving notification of information about a data amount of a transmission buffer, and the like. The NR MAC may have a bandwidth adaptation (BA) function. In addition, an MAC PDU format used in the E-UTRA MAC may be different from an MAC PDU format used in the NR MAC. In addition, the MAC PDU may include an MAC control element (MAC CE) which is an element for performing control over the MAC.

Uplink (LTL) and/or downlink (DL) logical channels used in E-UTRA and/or NR will be described.

A broadcast control channel (BCCH) may be a downlink logical channel for broadcasting control information, such as system information (SI).

A paging control channel (PCCH) may be a downlink logical channel for carrying a paging message.

A common control channel (CCCH) may be a logical channel for transmitting control information between the terminal apparatus and the base station apparatus. The CCCH may be used in a case that the terminal apparatus does not have an RRC connection. In addition, the CCCH may be used between the base station apparatus and multiple terminal apparatuses.

A dedicated control channel (DCCH) may be a logical channel for transmitting dedicated control information in a point-to-point bi-directional manner between the terminal apparatus and the base station apparatus. The dedicated control information may be control information dedicated to each terminal apparatus. The DCCH may be used in a case that the terminal apparatus has an RRC connection.

A dedicated traffic channel (DTCH) may be a logical channel for transmitting user data in a point-to-point manner between the terminal apparatus and the base station apparatus. The DTCH may be a logical channel for transmitting dedicated user data. The dedicated user data may be user data dedicated to each terminal apparatus. The DTCH may be present in both uplink and downlink.

Mapping between a logical channel and a transport channel in uplink in E-UTRA and/or NR will be described.

The CCCH may be mapped to the uplink shared channel (UL-SCH) that is an uplink transport channel.

The DCCH may be mapped to the uplink shared channel (UL-SCH) that is an uplink transport channel.

The DTCH may be mapped to the uplink shared channel (UL-SCH) that is an uplink transport channel.

Mapping between a logical channel and a transport channel in downlink in E-UTRA and/or NR will be described.

The BCCH may be mapped to a broadcast channel (BCH) and/or a downlink shared channel (DL-SCH) that are downlink transport channels.

The PCCH may be mapped to a paging channel (PCH) that is a downlink transport channel.

The CCCH may be mapped to the downlink shared channel (DL-SCH) that is a downlink transport channel.

The DCCH may be mapped to the downlink shared channel (DL-SCH) that is a downlink transport channel.

The DTCH may be mapped to the downlink shared channel (DL-SCH) that is a downlink transport channel.

An example of functions of the RLC will be described. The RLC may be called an RLC sublayer. The E-UTRA RLC may have a function of segmenting and/or concatenating data provided from the PDCP of a higher layer and providing the data to a lower layer. The E-UTRA RLC may have a function of performing reassembling and re-ordering data provided from a lower layer and providing the data to a higher layer. The NR RLC may have a function of giving a sequence number independent of the sequence number added by the PDCP of a higher layer to the data provided from the PDCP. In addition, the NR RLC may have a function of segmenting data provided from the PDCP and providing the data to a lower layer. In addition, the NR RLC may have a function of reassembling data provided from a lower layer and providing the data to a higher layer. In addition, the RLC may have a data retransmission function and/or a retransmission request function (automatic repeat request or ARQ). In addition, the RLC may have a function of performing error correction by using ARQ. Control information indicating data that needs to be retransmitted, which is transmitted from the reception side to the transmission side of the RLC in order to perform ARQ, may be referred to as a status report. In addition, an indication of transmission of status report transmitted from the transmission side to the reception side of the RLC may be referred to as a poll. In addition, the RLC may have a function of detecting data duplication. In addition, the RLC may have a function of data discard. The RLC may have three modes of a transparent mode (TM), an unacknowledged mode (UM), and an acknowledged mode (AM). In the TM, data received from a higher layer is not segmented, and no RLC header may not be added. A TM RLC entity is a uni-directional entity and may be configured as a transmitting TM RLC entity or a receiving TM RLC entity. Although data received from a higher layer is segmented and/or concatenated, an RLC header is added, and the like in the UM, retransmission control of data may not be performed. A UM RLC entity may be a uni-directional entity or a bi-directional entity. In a case that a UM RLC entity is a uni-directional entity, the UM RLC entity may be configured as a transmitting UM RLC entity or a receiving UM RLC entity. In a case that a UM RLC entity is a bi-directional entity, the UM RRC entity may be configured as a UM RLC entity configured in a transmitting side and a receiving side. In the AM, data received from a higher layer may be segmented and/or concatenated, an RLC header may be added, retransmission control of data may be performed, and the like. An AM RLC entity is a bi-directional entity and may be configured as an AM RLC configured in a transmitting side and a receiving side. Further, data provided to a lower layer and/or data provided from a lower layer in the TM may be called a TMD PDU. In addition, data provided to a lower layer and/or data provided from a lower layer in the UM may be called a UMD PDU. In addition, data provided to a lower layer and/or data provided from a lower layer in the AM may be called a AMD PDU. An RLC PDU format used in the E-UTRA RLC may be different from an RLC PDU format used in the NR RLC. In addition, the RLC PDU may include a data RLC PDU and a control RLC PDU. The data RLC PDU may be called an RLC data PDU. In addition, control RLC PDU may be called an RLC control PDU.

An example of functions of the PDCP will be described. The PDCP may be called a PDCP sublayer. The PDCP may have a function of maintaining sequence numbers. In addition, the PDCP may have a header compression/decompression function for efficiently transmitting user data such as IP packets, Ethernet frames, and the like over a radio section. A protocol used for header compression/decompression of an IP packet may be called a robust header compression (ROHC) protocol. In addition, a protocol used for Ethernet (registered trademark) frame header compression/decompression may be called an Ethernet Header Compression (EHC) protocol. In addition, the PDCP may have a data encryption/decryption function. In addition, the PDCP may have a data integrity protection/integrity verification function. In addition, the PDCP may have a re-ordering function. In addition, the PDCP may have a PDCP SDU retransmission function. In addition, the PDCP may have a function of discarding data using a discard timer. In addition, the PDCP may have a multiplexing (duplication) function. In addition, the PDCP may have a function of discarding redundantly received data. A PDCP entity is a bi-directional entity and may be configured of a transmitting PDCP entity and a receiving PDCP entity. In addition, a PDCP PDU format used in the E-UTRA PDCP may be different from a PDCP PDU format used in the NR PDCP. In addition, the PDCP PDU may include a data PDCP PDU and a control PDCP PDU. The data PDCP PDU may be called an PDCP data PDU. In addition, the control PDCP PDU may be called a PDCP control PDU.

An example of functions of the SDAP will be described. The SDAP is a service data adaptation protocol layer. The SDAP may have a function of mapping a QoS flow of downlink transmitted from the 5GC to a terminal apparatus through a base station apparatus to a data radio bearer (DRB), and/or mapping a QoS flow of uplink transmitted from a terminal apparatus to the 5GC through a base station apparatus to a DRB. In addition, the SDAP may have a function of storing mapping rule information. In addition, the SDAP may have a function of marking a QoS flow identifier (QoS Flow ID or QFI). Further, examples of SDAP PDU may include a SDAP PDU for data and a SDAP PDU for control. The SDAP PDU for data may be called an SDAP data PDU. In addition, the SDAP PDU for control may be called a SDAP control PDU. Further, there may be one SDAP entity of the terminal apparatus for a PDU session.

An example of functions of the RRC will be described. The RRC may have a broadcast function. The RRC may have a function of paging from the 5GC. The RRC may have a function of paging from the gNB 102 or the ng-eNB 100. In addition, the RRC may have an RRC connection management function. In addition, the RRC may have a radio bearer control function. In addition, the RRC may have a cell group control function. In addition, the RRC may have a mobility control function. In addition, the RRC may have terminal apparatus measurement reporting and terminal apparatus measurement reporting control functions. In addition, the RRC may have a QoS management function. In addition, the RRC may have radio link failure detection and recovery functions. The RRC may use RRC messages to perform broadcast, paging, RRC connection management, radio bearer control, cell group control, mobility control, terminal apparatus measurement reporting and terminal apparatus measurement reporting control, QoS management, detection and recovery of radio link failure, and the like. Further, an RRC message or parameter used in E-UTRA RRC may be different from an RRC message or parameter used in NR RRC.

An RRC message may be transmitted using the BCCH of a logical channel, may be transmitted using the PCCH of the logical channel, may be transmitted using the CCCH of the logical channel, and may be transmitted using the DCCH of the logical channel In addition, an RRC message transmitted using the DCCH is referred to as dedicated RRC signaling or RRC signaling.

An RRC message transmitted using the BCCH may include, for example, a master Information block (MIB), may include a system information block (SIB) of each type, or may include another RRC message. An RRC message transmitted using the PCCH may include a paging message, or may include another RRC message.

An RRC message transmitted using the CCCH in the uplink (LTL) direction may include, for example, an RRC setup request message (RRC Setup Request), an RRC resumption request message (RRC Resume Request), an RRC reestablishment request message (RRC Reestablishment Request), an RRC system information request message (RRC System Info Request), and the like. In addition, for example, an RRC connection request message (RRC Connection Request), an RRC connection resumption request message (RRC Connection Resume Request), an RRC connection reestablishment request message (RRC Connection Reestablishment Request), and the like may be included. Other RRC messages may also be included.

An RRC message transmitted using the CCCH in the downlink (DL) direction may include, for example, an RRC connection rejection message (RRC Connection Reject), an RRC connection setup message (RRC Connection Setup), an RRC connection reestablishment message (RRC Connection Reestablishment), an RRC connection reestablishment rejection message (RRC Connection Reestablishment Reject), and the like. In addition, for example, an RRC rejection message (RRC Reject), an RRC setup message (RRC Setup), and the like may be included. Other RRC messages may also be included.

RRC signaling transmitted using the DCCH in the uplink (UL) direction may include, for example, a measurement report message (Measurement Report), an RRC connection reconfiguration completion message (RRC Connection Reconfiguration Complete), an RRC connection setup completion message (RRC Connection Setup Complete), an RRC connection reestablishment completion message (RRC Connection Reestablishment Complete), a security mode completion message (Security Mode Complete), a UE capability information message (UE Capability Information), and the like. In addition, for example, a measurement report message (Measurement Report), an RRC reconfiguration completion message (RRC Reconfiguration Complete), an RRC setup completion message (RRC Setup Complete), an RRC reestablishment completion message (RRC Reestablishment Complete), an RRC resumption completion message (RRC Resume Complete), a security mode completion message (Security Mode Complete), a UE capability information message (UE Capability Information), and the like may be included. Other RRC signaling may also be included.

RRC signaling transmitted using the DCCH in the downlink (DL) direction may include, for example, an RRC connection reconfiguration message (RRC Connection Reconfiguration), an RRC connection release message (RRC Connection Release), a security mode command message (Security Mode Command), a UE capability enquiry message (UE Capability Enquiry), and the like. In addition, for example, an RRC reconfiguration message (RRC Reconfiguration), an RRC resumption message (RRC Resume), an RRC release message (RRC Release), an RRC reestablishment message (RRC Reestablishment), a security mode command message (Security Mode Command), a UE capability enquiry message (UE Capability Enquiry), and the like may be included. Other RRC signaling may also be included.

The functional of the above-described PHY, MAC, RLC, PDCP, SDAP, and RRC are an example, and some or all of the functions may not be implemented. In addition, some or all of the functions of each layer may be included in another layer.

A radio bearer will be described. In a case that a terminal apparatus communicates with a base station apparatus, a wireless connection may be performed by establishing a radio bearer (RB) between the terminal apparatus and the base station apparatus. A radio bearer used in the CP may be called a signaling radio bearer (SRB). In addition, a radio bearer used in the UP may be called a data radio bearer (DRB). A radio bearer identifier (Identity or ID) may be allocated to each radio bearer A radio bearer identifier for the SRB may be called an SRB identifier (SRB Identity or SRB ID). A radio bearer identifier for the DRB may be called a DRB identifier (DRB Identity or DRB ID). For the SRB of E-UTRA, SRB0 to SRB2 may be defined, and other SRBs may be defined. For the SRB of NR, SRB0 to SRB3 may be defined, and other SRBs may be defined. The SRB0 may be an SRB for RRC messages that are transmitted and/or received using the CCCH of a logical channel. The SRB1 may be an SRB for RRC signaling and for NAS signaling prior to establishment of the SRB2. Piggybacked NAS signaling may be included in the RRC signaling transmitted and/or received using the SRB1. The DCCH of the logical channel may be used for all RRC signaling and NAS signaling transmitted and/or received using the SRB1. The SRB2 may be an SRB for NAS signaling and for RRC signaling including logged measurement information. The DCCH of the logical channel may be used for all RRC signaling and NAS signaling transmitted and/or received using the SRB2. In addition, the SRB2 may have a lower priority than the SRB1. The SRB3 may be an SRB for transmitting and/or receiving specific RRC signaling when EN-DC, NGEN-DC, NR-DC, etc. is configured for the terminal apparatus. The DCCH of the logical channel may be used for all RRC signaling and NAS signaling transmitted and/or received using the SRB3. In addition, other SRBs may be provided for other applications. The DRB may be a radio bearer for user data. The DTCH of the logical channel may be used for the RRC signaling transmitted and/or received using the DRB.

A radio bearer for a terminal apparatus will be described. A radio bearer may include an RLC bearer. An RLC bearer may consist of one or two RLC entities and the logical channel. The RLC entities when there are two RLC entities in the RLC bearer may be TM RLC entity and/or a transmitting RLC entity and a receiving RLC entity for RLC entities in the unidirectional UM mode. The SRB0 may consist of one RLC bearer. An RLC bearer of the SRB0 may consist of a TM RLC entity and a logical channel. The SRB0 may be established in the terminal apparatus at all times in all states (the RRC idle state, the RRC connected state, the RRC inactive state, and the like). One SRB 1 may be established and/or configured in the terminal apparatus by RRC signaling received from the base station apparatus when the terminal apparatus transitions from the RRC idle state to the RRC connected state. One SRB1 may consist of one PDCP entity and one or more RLC bearers. An RLC bearer of the SRB1 may consist of an AM RLC entity and a logical channel. One SRB2 may be established and/or configured in the terminal apparatus through RRC signaling received from the base station apparatus by the terminal apparatus in the RRC connected state in which AS security is activated. One SRB2 may consist of one PDCP entity and one or more RLC bearers. An RLC bearer of the SRB2 may consist of an AM RLC entity and a logical channel. Further, the PDCP of the SRB 1 and SRB2 on the base station apparatus side may be located in a master node. One SRB3 may be established and/or configured in the terminal apparatus through RRC signaling received from the base station apparatus by the terminal apparatus in the RRC connected state with AS security activated when a secondary node is added or the secondary node is changed in EN-DC, NGEN-DC, or NR-DC. The SRB3 may be a direct SRB between the terminal apparatus and the secondary node. The SRB3 may consist of one PDCP entity and one or more RLC bearers. An RLC bearer of the SRB3 may consist of an AM RLC entity and a logical channel. The PDCP of the SRB3 on the base station apparatus side may be located in the secondary node. One DRB may be established and/or configured in the terminal apparatus through RRC signaling received from the base station apparatus by the terminal apparatus in the RRC connected state in which AS security is activated. The DRB may consist of one PDCP entity and one or more RLC bearers. An RLC bearer of the DRB may consist of an AM or UM RLC entity and a logical channel.

An RLC entity established and/or configured for an RLC bearer established and/or configured in a cell group configured on E-UTRA may be an E-UTRA RLC. In addition, an RLC entity established and/or configured for an RLC bearer established and/or configured in a cell group configured on NR may be an NR RLC. In a case that EN-DC is configured for the terminal apparatus, a PDCP entity established and/or configured for an MN-terminated MCG bearer may be either E-UTRA PDCP or NR PDCP. In addition, in a case that EN-DC is configured for the terminal apparatus, the PDCP established and/or configured for radio bearers of another bearer types, that is, an MN-terminated split bearer, an MN-terminated SCG bearer, an SN-terminated MCG bearer, an SN-terminated split bearer, and an SN-terminated SCG bearer may be the NR PDCP. In addition, in a case that NGEN-DC, NE-DC, or NR-DC is configured for the terminal apparatus, a PDCP entity established and/or configured for all bearer types of radio bearer may be the NR PDCP.

Further, in NR, the DRB established and/or configured for the terminal apparatus may be linked to one PDU session. One SDAP entity may be established and/or configured for one PDU session for the terminal apparatus. A SDAP entity, a PDCP entity, an RLC entity, and the logical channel established and/or configured for the terminal apparatus may be established and/or configured by RRC signaling received by the terminal apparatus from the base station apparatus.

Reference signal received power (RSRP) measured in sidelink may be, for example, the following RSRP. In addition, the following RSRP may be referred to as SL-RSRP.
(a) PSBCH RSRP
(b) PSSCH RSRP
(c) PSCCH RSRP

PSBCH-RSRP (PSBCH RSRP) may be defined as a linear average of power contributions of resource elements carrying a plurality of demodulation reference signals (DMRS) associated with the PSBCH. In addition, PSSCH-RSRP (PSSCH RSRP) may be defined as a linear average of power contributions of resource elements of antenna ports transmitting a plurality of DMRSs associated with the PSSCH, and in a case that there are a plurality of antenna ports, the values of RSRP for the antenna ports may be summed. PSCCH-RSRP (PSCCH RSRP) may be defined as a linear average of power contributions of resource elements carrying a plurality of DMRSs associated with the PSCCH. Further, DMRSs may be used to demodulate, for example, signals of the PSBCH, PSSCH, and PSCCH. In addition, the terminal apparatus may measure RSRP (SD-RSRP) of a discovery message by using the power contribution of the resource element that transmits a DMRS associated with the discovery message.

In addition, in measurement in sidelink, the LTE 122 may measure the following quantities in addition to the SL-RSRP.
(a) Sidelink received signal strength indicator (SL RSSI)
(b) Sidelink channel occupancy ratio (SL CR)
(c) Sidelink channel busy ratio (SL CBR)

The L2 U2N remote UE may discover candidate L2 U2N relay UE, measure the RSRP of the candidate L2 U2N relay UE, and then report one or more candidate L2 U2N relay UE to the base station apparatus. Further, before reporting one or more candidate L2 U2N relay UE to the base station apparatus, the L2 U2N remote UE may determine whether the measured RSRP of the candidate L2 U2N relay UE satisfies the selection criterion for the L2 U2N relay. The L2 U2N remote UE may report only the candidate L2 U2N relay UE that meets the selection criterion and meets the criterion for the higher layer to the base station apparatus. In addition, when the L2 U2N remote UE reports one or more pieces of candidate L2 U2N relay UE to the base station apparatus, identification information of the candidate L2 U2N relay UE, identification information of the serving cell of the candidate L2 U2N relay UE and the measurement result may be included in the report to the base station apparatus. Further, RSRP (SD-RSRP) of the discovery message transmitted by the candidate L2 U2N relay UE may be used as the measurement result. Further, the identification information may be an identifier (ID).

In addition, the L2 U2N remote UE having serving L2 U2N relay UE may use RSRP (SL-RSRP) measured in sidelink communication with the serving L2 U2N relay UE as the measurement result. Further, in a case that SL-RSRP cannot be used for the measurement result, SD-RSRP may be used. Further, the serving L2 U2N relay UE may be L2 U2N relay UE providing the L2 U2N remote UE with connectivity to the base station apparatus.

Next, the serving cell will be described. In the terminal apparatus in the RRC connected state in which carrier aggregation (CA) and/or multi-connectivity (MC) is not configured, the serving cell may be constituted by one primary cell (PCell). In addition, in the terminal apparatus in the RRC connected state in which CA and/or MC is configured, a plurality of serving cells may mean a set of cell(s) constituted by one or more special cells (SpCells) and one or more secondary cells (SCells). The SpCells may support PUCCH transmission and contention-based random access (CBRA). The PCell may be a cell used for an RRC connection establishment procedure when the terminal apparatus in the RRC idle state transitions to the RRC connected state. In addition, the PCell may be a cell used for an RRC connection reestablishment procedure in which the terminal apparatus reestablishes an RRC connection. Furthermore, the PCell may be a cell used for a random access procedure at the time of handover. A PSCell may be a cell used for a random access procedure when adding a secondary node for MC. The PCell and the PSCell may be an SpCell. In addition, the SpCell may be a cell used for a purpose other than the above-described purposes.

Measurement will be described. Further, in the following description, the base station apparatus may be read as a network. The base station apparatus may configure the terminal apparatus in the RRC connected state to perform measurement. The base station apparatus may configure the terminal apparatus to report the measurement result. The measurement configuration may be provided from the base station apparatus to the terminal apparatus by RRC signaling (for example, an RRC reconfiguration message (RRCReconfiguration) or an RRC resumption (RRCResume) message).

The base station apparatus may configure the terminal apparatus to perform the following types of measurement, for example.
(a) NR measurement
(b) Inter-radio access technology (Inter-RAT) measurement of E-UTRA frequency
(c) Inter-radio access technology (Inter-RAT) measurement of UTRA-FDD frequency
(d) NR sidelink measurement of L2 U2N relay UE

The base station apparatus may configure the terminal apparatus to report the following measurement information based on an SSB, for example.
(a) Measurement result for each SSB
(b) Measurement result for each cell based on a SSB
(c) SSB index.

The base station apparatus may configure the terminal apparatus to report the following measurement information based on CSI-RS, for example.
(a) Measurement result for each CSI-RS resource
(b) Measurement result for each cell based on CSI-RS.
(c) CSI-RS resource measurement identifier.

The base station apparatus may configure the terminal apparatus to perform the following types of measurement, for example, for NR sidelink and/or V2X sidelink.
(a) Channel busy ratio (CBR) measurement

The measurement configuration may include some or all of measurement objects (Measurement Objects), reporting configuration (Reporting configuration), measurement identifiers (Measurement identities), quantity configuration (Quantity Configuration), measurement gap configuration (Measurement gap configuration), and serving cell quality threshold configuration (s-Measure configuration).

### Quantity Configuration (quantityConfig)

In a case that measurement objects (Measurement objects) are NR and/or E-UTRA, the quantity configuration (quantityConfig) specifies a Layer 3 filter coefficient (L3 filtering coefficient). The L3 filtering coefficient specifies the ratio of the most recent measurement result to the past filtering measurement result. The filtering result may be used for event evaluation in the terminal apparatus.

### Measurement Gap Configuration (measGapConfig)

The measurement gap configuration includes information on the length and period of a measurement gap. The measurement gap configuration may be independently configured for each terminal apparatus or for each predetermined frequency range.

### Measurement Identifier (measId)

A measurement identifier is used to link (or associate) a measurement object to (or with) a reporting configuration. Specifically, a measurement object identifier (measObjectId) for uniquely identifying each measurement object is linked to a reporting configuration identifier (reportConfigId) for uniquely identifying each reporting configuration. One measurement object identifier and one reporting configuration identifier are associated with a measurement identifier. The measurement configuration may be configured to allow addition, modification, and deletion of measurement identifiers, measurement objects, and/or reporting configurations.

### Measurement Objects

A measurement object may be information defined for each RAT, frequency, and/or subcarrier spacing.

A measurement object may include a measurement object NR (measObjectNR) in which the measurement object associated with a measurement object identifier is NR and a measurement object EUTRA (measObjectEUTRA) in which the measurement object is E-UTRA. In addition, the measurement object may include some or all of a measurement object UTRA (measObjectUTRA) whose measurement object is UTRA, a measurement object GERAN (measObjectGERAN) whose measurement object is GERAN, a measurement object CDMA2000 (measObjectCDMA2000) whose measurement object is CDMA2000, and a measurement object Relay (measObjectRelay) whose measurement object is relay UE.

The measurement object NR may include some or all of frequency information (ssbFrequency) of a block (SSB) including a synchronization signal, a subcarrier spacing of the SSB (ssbSubcarrierSpacing), information about a list of cells to be measured, information about a black list to be excluded from measurement, and information about a white list to be measured. The measurement object Relay may include information on a frequency used in sidelink communication.

The information on the list of cells to be measured includes information on cells to be subjected to event evaluation and measurement reporting. The information on the list of cells to be measured may include a physical cell identifier (physical cell ID), a cell-specific offset (cellIndividualOffset, indicating a measurement offset value applied to a neighbor cell), and the like. In addition, the measurement object Relay may include information on L2 U2N Relay LTE to be subjected to event evaluation and measurement reporting.

### Reporting Configurations

The reporting configuration may include reporting configuration NR (reportConfigNR) and/or reporting configuration NR-SL (reportConfigNR-SL) associated with a reporting configuration identifier (reportConfigId).

The reporting configuration identifier is an identifier used to identify a reporting configuration related to measurement. The reporting configuration related to measurement may include information for measurement of NR, information for measurement of a RAT other than NR (some or all of UTRA, GERAN, CDMA2000, and E-UTRA), information for measurement of sidelink of NR, and the like. The reporting configuration NR (reportConfigNR) which is a reporting configuration for NR may include triggering criteria of an event used for reporting measurement in NR. The reporting configuration NR-SL (reportConfigNR-SL) may include triggering criteria of an event used for reporting measurement in sidelink of NR.

The reporting configuration NR may also include some or all of an event identifier (eventId), a trigger quantity (triggerQuantity), hysteresis, a trigger time (timeToTrigger), a report quantity (reportQuantity), a maximum number of cells for reporting (maxReportCells), a report interval (reportInterval), and a number of times of reporting (reportAmount).

In addition, the reporting configuration NR-SL may include some or all of an event identifier (eventId), a trigger quantity (triggerQuantity), a report quantity (reportQuantity), a report interval (reportInterval), a number of times of reporting (reportAmount), and a maximum number of reporting relays (maxReportRelays).

Next, reporting configuration NR-SL will be described. The event identifier is used to select criteria for event triggered reporting. Here, event triggered reporting is a method of reporting measurement in a case that an event trigger condition is satisfied. In addition, there is event triggered periodic reporting in which measurement is reported a certain number of times at regular intervals in a case that an event trigger condition is satisfied.

In a case that the event trigger condition specified by the event identifier is satisfied, the terminal apparatus reports measurement (measurement reporting) to the base station apparatus. The trigger quantity may be a quantity utilized to evaluate the event trigger condition. As the trigger quantity, a reference signal received power (SD-RSRP) of a discovery message or RSRP measured in sidelink communication (SL-RSRP) may be specified. That is, the terminal apparatus may perform measurement using the quantity specified based on the trigger quantity. In addition, the terminal apparatus may determine whether the event trigger condition specified with the event identifier is satisfied. The report quantity may indicate a quantity to be reported in measurement reporting. The maximum number of reporting relays (maxReportRelays) may indicate the maximum number of cells to be included in measurement reporting. The report interval is used for periodic reporting or event triggered periodic reporting, and the periodic reporting may be performed by the terminal apparatus for each interval indicated by the report interval. The number of times of reporting (reportAmount) may be the number of times of performing periodic reporting as necessary.

Further, the terminal apparatus may be notified of a threshold parameter and an offset parameter used in the event trigger condition together with the event identifier in the reporting configuration NR-SL.

### Regarding Event Trigger Condition

A plurality of event trigger conditions for performing measurement reporting may be defined, and each of the event trigger conditions may include an entering condition and a leaving condition. The terminal apparatus satisfying the entering condition for the event specified by the base station apparatus may transmit the measurement report to the base station apparatus. In addition, the terminal apparatus satisfying the leaving condition for the event specified by the base station apparatus may transmit the measurement report to the base station apparatus in a case that the terminal apparatus is configured to trigger a report in a case that the leaving condition is satisfied by the base station apparatus (in a case that reportOnLeave is included in a reporting configuration).

In addition, in a reporting configuration InterRAT (reportConfigInterRAT) which is a reporting configuration for a RAT other than NR, a plurality of triggering conditions (triggering criteria) of an event used for reporting measurement in the RAT other than NR may be defined. For example, in a case that the measurement result of a neighboring cell (other RAT) is better than a thresholds b1_Threshold set for each RAT after each parameter is applied, an event B1 occurs. In addition, in a case that the measurement result of PCell is worse than a threshold b2_Threshold1 after each parameter is applied and the measurement result of the neighbor cell (other RAT) is better than the thresholds b2_Threshold2 configured for each RAT after each parameter is applied, an event B2 may occur.

Further, the base station apparatus may or may not notify the terminal apparatus of a serving cell quality threshold (s-Measure). When the serving cell quality threshold (s-Measure) is configured by the base station apparatus and the quality (RSRP value) of the PCell that is a serving cell after filtering of Layer 3 is lower than the serving cell quality threshold (s-Measure), the terminal apparatus may perform measurement of the neighboring cell of the frequency and/or RAT specified by the measurement object and/or the measurement of the candidate L2 U2N relay UE. In addition, in a case that the serving cell quality threshold (s-Measure) is not configured for the terminal apparatus by the base station apparatus, the terminal apparatus performs the measurement of the neighboring cell of the frequency and/or RAT specified by the measurement object and/or the measurement of the candidate L2 U2N relay UE regardless of the serving cell quality (RSRP value).

### Regarding Measurement Result

The terminal apparatus may start the procedure of the measurement reporting in a case that an event trigger condition is satisfied, the first measurement result of periodic reports becomes available, a timer or a timer T321 of the periodic reports expires, or the like. The purpose of the procedure of the measurement report is to forward a measurement report message from the terminal apparatus to the network. A measurement result may be included in the measurement report message. A measurement result may be configured for each measurement identifier by which the procedure of measurement reporting is triggered.

The measurement result may include the measurement identifier, a measurement result of the serving L2 U2N relay UE (sl-MeasResultServingRelay-r17), and/or the measurement result of the candidate L2 U2N relay UE (sl-MeasResultsCandRelay-r17). The measurement result of the serving L2 U2N relay UE and the measurement result of the candidate L2 U2N relay UE may include a PLMN identifier as a cell identifier. The measurement result of the serving L2 U2N relay UE may include an identifier for identifying the source of sidelink communication (for example, a source L2ID). The measurement result of the candidate L2 U2N relay UE may include an identifier for identifying the destination of sidelink communication (for example, a destination L2ID).

In the procedure of the measurement reporting, the above-mentioned measurement result may be set for each measurement identifier by which the procedure of the measurement reporting is triggered, and a measurement report message including the measurement result may be submitted to a lower layer.

Various embodiments will be described based on the foregoing description. Further, each of the processing operations described above may be applied to processing operations omitted in the following description.

FIG. 5 is a block diagram illustrating a configuration of the terminal apparatus (UE 122) according to the present embodiment. Further, FIG. 5 illustrates only the main constituent portions closely related to the present embodiment in order to avoid complexity of description.

The LTE 122 illustrated in FIG. 5 includes a receiver 503 that receives control information (SCI, MAC control elements, RRC signaling, etc.), information including discovery messages, user data, and the like from another terminal apparatus, a measurement unit 504 that measures signal power in communication with another terminal apparatus, a processor 505 that performs processing according to parameters included in the received control information, and the like, and a transmitter 501 that transmits control information (SCI, MAC control elements, RRC signaling, etc.), information including discovery messages, user data, and the like to another terminal apparatus. In addition, the processor 505 may include some or all of the functions of various layers (e.g., a physical layer, an MAC layer, an RLC layer, a PDCP layer, an SDAP layer, an RRC layer, a PC5-S layer, a discovery layer, and an app layer). In other words, the processor 505 may include some or all of a physical layer processor (PHY processor), an MAC layer processor (MAC processor), an RLC layer processor (RLC processor), a PDCP layer processor (PDCP processor), an SDAP processor (SDAP processor), an RRC layer processor (RRC processor), a PC5-S layer processor (PC5-S processor), a discovery layer processor (discovery processor), and an app layer processor.

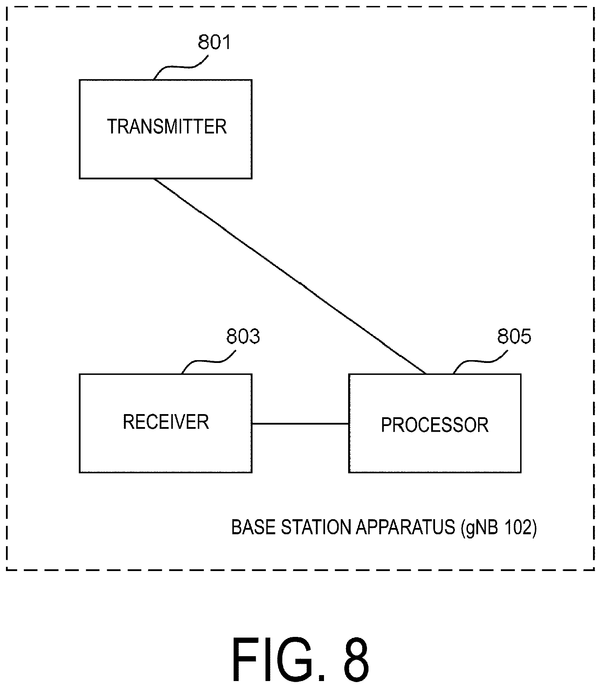

FIG. 8 is a block diagram illustrating a configuration of the base station apparatus (gNB 102) according to the present embodiment. Further, FIG. 8 illustrates only the main constituent portions closely related to the present embodiment in order to avoid complexity of description.

The base station apparatus illustrated in FIG. 8 includes a transmitter 801 that transmits control information (DCI, MAC CE, RRC signaling, etc.) to the UE 122, a processor 805 that generates control information (DCI, MAC CE, RRC signaling, etc.) and transmits it to the UE 122 to cause the processor 505 of the UE 122 to perform processing, and a receiver 803 that receives the control information (UCI, MAC CE, RRC signaling, etc.) from the LTE 122. In addition, the processor 805 may include some or all of the functions of various layers (e.g., a physical layer, an MAC layer, an RLC layer, a PDCP layer, an SDAP layer, an RRC layer, and a NAS layer). In other words, the processor 805 may include some or all of a physical layer processor, an MAC layer processor, an RLC layer processor, a PDCP layer processor, an SDAP processor, an RRC layer processor, and a NAS layer processor.

FIG. 6 illustrates an example of an embodiment according to the present invention.

Step S601: The UE 122 that communicates with the base station apparatus via a relay terminal apparatus receives measurement parameters transmitted from the base station apparatus with the receiver 503, and transmits the measurement parameters to the processor 505. Thereafter, the processing proceeds to step S602. The processor 505 may receive the value of the reference signal received power through a data bus 502, or may receive the value through another path which is not illustrated. In the description of the subsequent steps, in a case that data and instructions are transmitted and/or received between the constituent components, the above-described processing is applied, and the description thereof is omitted. Further, some or all of the units may be configured as one unit. That is, in the following description, data, messages, and/or other information may be shared without being transmitted and/or received via the data bus.

Step S602: The processor 505 checks whether sidelink quality threshold information is included in the measurement parameters received from the receiver 503. A sidelink quality threshold configuration may be a parameter included in a serving cell quality threshold configuration included in the measurement parameters, or may be included in the measurement parameters as an independent parameter. In a case that the measurement parameters received from the receiver 503 include the sidelink quality threshold configuration, the processor 505 may indicate to the measurement unit 504 to measure the reference signal received power (RSRP) of the relay terminal apparatus (serving relay terminal apparatus) to which the UE 122 is currently connected using sidelink communication. The measurement unit 504 may measure the reference signal received power. The measurement unit 504 may notify the processor 505 of the measured value of the reference signal received power. The processor 505 compares the value of the reference signal received power received from the measurement unit 504 with the threshold configured based on the sidelink quality threshold configuration, and determines whether the reference signal received power is lower than the threshold. In a case that the processor 505 determines that the received power is lower than the threshold, the process proceeds to step S603. Further, step S603 may not be processed under another condition even in a case that the processor 505 determines that the received power is lower than the threshold.

In addition, the determination may be a determination as to whether the threshold is equal to or higher than the value of the reference signal received power, a determination as to how much the threshold is higher than the value of the reference signal received power, or a determination as to how much the value of the reference signal received power is lower than the threshold. Furthermore, the determination may be based on a comparison of absolute values, or may be based on a relative comparison of values.

Step S603: The processor 505 indicates to the measurement unit 504 to measure the reference signal received power in communication with at least one or a plurality of terminal apparatuses included in the information of the measurement object based on the information of the measurement object included in the measurement parameters. Based on the indication, the measurement unit 504 measures the reference signal received power and notifies the processor 505 of the measurement result.

FIG. 7 illustrates an example of processing performed by the processor 505 based on the measurement result of the measurement object, the notification of the measurement result being issued from the measurement unit 504 in step S603.

Step S701 : It is determined whether the reference signal received power of one or more measurement objects satisfies the condition for a report to the base station apparatus, the notification of the reference signal received power being issued from the measurement unit 504. As an example, the determination may be a determination using the reference signal received power (first RSRP) of the serving relay terminal apparatus and the reference signal received power (second RSRP) of the measurement objects. For example, the determination may be based on a combination of whether each of the first RSRP and the second RSRP is higher or lower than a certain threshold and/or is the same value as the threshold. In addition, for example, the determination may be based on a comparison of power on a relative scale by comparing the first RSRP and the second RSRP. Alternatively, the determination may be made based on other criteria. In a case that it is determined that the condition for a report to the base station apparatus is satisfied, the processor 505 may indicate to the transmitter 501 to transmit the measurement report based on the determination.

The base station apparatus may configure the terminal apparatus in the RRC connected state to perform measurement. The base station apparatus may configure the terminal apparatus to report the measurement result. The measurement configuration may be provided from the base station apparatus to the terminal apparatus by RRC signaling (for example, an RRC reconfiguration message (RRCReconfiguration) or an RRC resumption (RRCResume) message). The base station apparatus may configure the terminal apparatus in the RRC connected state to perform the measurement processing included in each of the steps. The notification of the measurement parameters for performing the measurement processing is issued from the base station apparatus to the terminal apparatus through RRC signaling, and at this time, the serving cell quality threshold configuration and the sidelink quality threshold configuration may be included in the measurement parameters. The serving cell quality threshold configuration may include any one or more of physical broadcast channel received power threshold information, channel state received power threshold information, sidelink received power threshold information, and received power threshold information of a plurality of communication modes, and in comparison with the reference signal received power, one or more pieces of the threshold information may be used to determine whether reporting to the base station apparatus is necessary.

An example of processing related to measurement of the UE 122 will be described.

The LTE 122 may receive a measurement configuration (measurement parameter) from the base station apparatus through RRC signaling. The notification of the measurement configuration may be sent directly from the base station apparatus, may be sent via a relay terminal apparatus, or may be sent through another path. The measurement configuration may be included in an RRC reconfiguration message and/or an RRC resumption message.

The measurement configuration may include one or more measurement objects and/or one or more reporting configurations. In addition, the measurement configuration may also include one or more measurement identifiers. One measurement object and one reporting configuration may be linked to one measurement identifier. The measurement objects may include information indicating which measurement object is linked to the reporting configuration in the measurement identifier.

The reporting configuration may include a condition (trigger condition) for triggering reporting of the measurement result. The trigger condition may include some or all of the following events:
(a) a channel busy ratio (CBR) of NR sidelink communication exceeding a threshold (event C1);
(b) a channel busy ratio (CBR) of NR sidelink communication being less than the threshold (event C2);
(c) a reference signal received power of the serving relay terminal apparatus being lower than a threshold and a reference signal received power of a neighboring relay terminal apparatus (candidate L2 U2N relay UE) being higher than the threshold (event Z1);
(d) a reference signal received power of the neighboring relay terminal apparatus (candidate L2 U2N relay UE) becoming higher than an offset reference signal received power of the serving relay terminal apparatus (event Z2);
(e) a reference signal received power of a SpCell being lower than a threshold and a reference signal received power of a neighboring cell being higher than the threshold (event A5); and
(f) a reference signal received power of the neighboring cell being higher than an offset reference signal received power of the SpCell (event A3).

Some or all of the trigger conditions may be included in the existing reporting configuration NR and/or a reporting configuration NR-SL, or may be included in other configurations (for example, a reporting configuration NR-Relay).

The measurement configuration may include information on thresholds used by the UE 122 to determine whether to measure a measurement object. The thresholds may include at least two types of a threshold (first threshold) used for comparison with the reference signal received power of the SpCell and a threshold (second threshold) used for comparison with the reference signal received power of the serving relay terminal apparatus.

For example, the measurement configuration may include a serving cell quality threshold configuration (s-Measure configuration) including the first threshold and a serving relay terminal apparatus quality threshold configuration (s-Measure-relay configuration) including the second threshold. Furthermore, for example, the measurement configuration may include a serving cell quality threshold configuration including the first threshold and the second threshold. Furthermore, for example, the measurement configuration may include a serving cell quality threshold configuration including any of the first threshold and the second threshold in a selection formula.

One or both of the first and second thresholds may not be configured for the UE 122.

The UE 122 may perform measurement of the measurement object based on the received measurement configuration.

For example, an example of measurement of the UE 122 in a case that a serving cell quality threshold configuration including any one of the first and second thresholds in a selection formula is included in a measurement configuration will be described.

The processor 505 of the LTE 122 may determine whether any one of the following conditions or a combination of the following conditions is satisfied for each configured measurement identifier.
(a) No serving cell quality threshold configuration is configured.
(b) The first threshold is configured by the serving cell quality threshold configuration, and the RSRP of the SpCell is lower than the first threshold.
(c) The second threshold is configured by the serving cell quality threshold configuration, and the RSRP of the serving relay terminal apparatus is lower than the second threshold.

The processor 505 of the UE 122 may determine to measure the measurement object linked to the measurement identifier at least based on the determination that any one of the above conditions or a combination of the above conditions is satisfied for each configured measurement identifier.

For example, an example of measurement of the UE 122 in a case that the measurement configuration includes the serving cell quality threshold configuration including the first threshold and the serving relay terminal apparatus quality threshold configuration including the second threshold will be described.

The processor 505 of the LTE 122 may determine whether any one of the following conditions or a combination of the following conditions is satisfied for each configured measurement identifier.
(a) Neither the serving cell quality threshold configuration nor the serving relay terminal apparatus quality threshold configuration are configured.
(b) The first threshold is configured by the serving cell quality threshold configuration, and the RSRP of the SpCell is lower than the first threshold.
(c) The second threshold is configured by the serving relay terminal apparatus quality threshold configuration, and the RSRP of the serving relay terminal apparatus is lower than the second threshold.

The processor 505 of the UE 122 may determine to measure the measurement object linked to the measurement identifier at least based on the determination that any one of the above conditions or a combination of the above conditions is satisfied for each configured measurement identifier.

Further, in each of the examples described above, the determination of whether to perform measurement using the first threshold and/or the second threshold may be performed only for the measurement identifier linked to a specific event. For example, the determination of whether to perform measurement using the second threshold may be performed only in the event Z2. That is, the determination of whether to measure the measurement identifier linked to the event other than the event Z2 may be performed regardless of whether the second threshold has been configured. In addition, as another example, for example, the determination of whether to perform measurement using the second threshold may be performed only in the event Z1 and the event Z2. That is, the determination of whether to measure the measurement identifier linked to the event other than the event Z1 and the event Z2 may be performed regardless of whether the second threshold has been configured.

Further, the embodiments may be combined with each other, and an embodiment obtained by combining the embodiments is also included in the technical scope of the present invention.

In each embodiment above-described, the threshold (first threshold) used for comparison with the reference signal received power of the SpCell may include a threshold (ssb-RSRP) used for comparison with the RSRP based on the SSB, a threshold (csi-RSRP) used for comparison with the RSRP based on CSI-RS, and the like.

In each embodiment above-described, the threshold (second threshold) used for comparison with the reference signal received power of the serving relay terminal apparatus may include a threshold (sd-RSRP) used for comparison with the RSRP (SD-RSRP) based on the reference signal of a discovery message, a threshold (sl-RSRP) used for comparison with the RSRP based on the reference signal used in sidelink communication, and the like.

The base station apparatus may select one of the ssb-RSRP and the csi-RSRP as the first threshold and notify the LTE 122 of the selected one. The base station apparatus may select one of the sd-RSRP and the sl-RSRP as the second threshold and notify the UE 122 of the selected one. Alternatively, which of the sd-RSRP and the sl-RSRP is to be used as the second threshold may be determined based on the specifications.

The base station apparatus may select one of some or all of the ssb-RSRP, the csi-RSRP, the sd-RSRP, and the sl-RSRP and notify the UE 122 of the selected one. In this case, the LTE 122 may determine that the notification of the first threshold has been issued based on the notification of the ssb-RSRP or the csi-RSRP. In addition, the UE 122 may determine that the notification of the second threshold has been issued based on the notification of the sd-RSRP or the sl-RSRP. In this case, the UE 122 may determine that the notification of the second threshold has been issued based on the notification of the ssb-RSRP or the csi-RSRP. In addition, the UE 122 may determine that the notification of the first threshold has not been issued based on the sd-RSRP or the sl-RSRP.

In addition, in the example of each processing operation or the example of the flow of each processing operation in the above description, some or all of the steps need not be performed. In addition, in the example of each processing operation or the example of the flow of each processing operation in the above description, order of the steps may be different. In addition, in the example of each processing operation or the example of the flow of each processing operation in the above description, part or all of the processing operations in each step may not be performed. In addition, in the example of each processing operation or the example of the flow of each processing operation in the above description, order of processing operations in each step may be different. In addition, in the above description, "perform B based on being A" may be rephrased with "perform B". In other words, "perform B" may be performed independently of "being A". In addition, in the above description, the expressions such as "linked", "associated", "related", and the like may be paraphrased with each other.

Further, in the above description, "A may be rephrased with B" may include the meaning "B is rephrased with A" in addition to "A is rephrased with B". In addition, in a case that the above description contains "C may be D" and "C may be E", the expression includes the meaning "D may be E". In addition, in a case that the above description contains "F may be G" and "G may be H", the expression includes the meaning "F may be H".

In addition, in the above description, in a case that a condition "A" and a condition "B" are conflicting conditions, the condition "B" may be expressed as "the other" condition of the condition "A".

A program running on an apparatus according to the present embodiment may serve as a program that controls a central processing unit (CPU) and the like to cause a computer to operate in such a manner as to realize the functions of the present embodiment. Programs or the information handled by the programs are temporarily loaded into a volatile memory such as a random access memory (RAM) while being processed, or stored in a non-volatile memory such as a flash memory, or a hard disk drive (HDD), and then read, modified, and written by the CPU, as necessary.

Further, some of the apparatuses in the above-described embodiment may be partially realized by a computer. In such a case, a program for realizing such control functions may be recorded on a computer-readable recording medium to cause a computer system to read and execute the program recorded on this recording medium. It is assumed that the "computer system" mentioned here refers to a computer system built into the apparatuses, the computer system including an operating system and hardware components such as peripheral devices. In addition, the "computer-readable recording medium" may be any of a semiconductor recording medium, an optical recording medium, a magnetic recording medium, and the like.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores a program for a fixed period of time, such as a volatile memory included in the computer system functioning as a server or a client in such a case. Furthermore, the above-described program may be configured to realize some of the functions described above, and additionally may be configured to realize the functions described above, in combination with a program already recorded in the computer system.

In addition, each functional block or various characteristics of the apparatuses used in the above-described embodiments may be implemented or performed with an electric circuit, that is, typically an integrated circuit or multiple integrated circuits. An electric circuit designed to perform the functions described in the present specification may include a general-purpose processor, a digital signal processor (DSP), an application-specific integrated circuit (ASIC), a field programmable gate array (FPGA), or other programmable logic devices, discrete gates or transistor logic, discrete hardware components, or a combination thereof. The general-purpose processor may be a microprocessor, or the processor may be a processor of a known type, a controller, a micro-controller, or a state machine instead. The general-purpose processor or the above-mentioned circuits may include a digital circuit or an analog circuit. In addition, in a case that a circuit integration technology appears that replaces the present integrated circuits with advances in the semiconductor technology, it is also possible to use an integrated circuit based on the technology.

Further, the present embodiment is not limited to the above-described embodiments. Although apparatuses have been described as an example in the embodiment, the present embodiment is not limited thereto, and is applicable to a stationary-type or a non-movable-type electronic apparatus installed indoors or outdoors, for example, a terminal apparatus or a communication apparatus such as an AV device, a kitchen device, a cleaning or washing machine, an air-conditioning device, office equipment, a vending machine, and other household appliances.

Although the embodiment of the present invention has been described in detail above referring to the drawings, the specific configuration is not limited to the embodiment and includes, for example, design changes within the scope that does not depart from the gist of the embodiment. In addition, various modifications can be made on the present embodiment within the scope of the claims, and embodiments that are made by suitably combining technical means disclosed according to the different embodiments are also included in the technical scope of the present embodiment. In addition, a configuration in which components, which are described in the embodiment described above, having similar effects are interchanged is also included in the present disclosure.

### Reference Signs List

100 ng-eNB
102 gNB
110, 112, 114 Interface
122 UE
200 PHY
202 MAC
204 RLC
206 PDCP
208 RRC
210 PC5-S
310 SDAP
400 Discovery
501, 801 Transmitter
502 Data bus
503, 803 Receiver
504 Measurement unit
505, 805 Processor

## Claims

1. A terminal apparatus for communicating with a base station apparatus via a relay terminal apparatus, the terminal apparatus comprising:
a receiver configured to receive a measurement parameter configured by the base station apparatus;
a measurement unit configured to measure a reference signal received power of one or more measurement objects based on the measurement parameter;
a processor configured to generate a measurement report message based on the reference signal received power measured by the measurement unit; and
a transmitter configured to transmit the measurement report message to the base station apparatus via the relay terminal apparatus, wherein
the processor determines whether to measure the reference signal received power of some or all of the one or more measurement objects based on a reference signal received power of the relay terminal apparatus and a threshold included in the measurement parameter.

2. The terminal apparatus according to claim 1, wherein
the processor
determines to measure the reference signal received power of some or all of the one or more measurement objects based on the reference signal received power of the relay terminal apparatus being lower than the threshold included in the measurement parameter, and
determines not to measure the reference signal received power of some or all of the one or more measurement objects based on the reference signal received power of the relay terminal apparatus being higher than the threshold included in the measurement parameter.

3. A base station apparatus for communicating with a terminal apparatus via a relay terminal apparatus, the base station apparatus comprising:
a processor configured to generate a measurement parameter of a reference signal received power in sidelink communication, the measurement parameter being configured for the terminal apparatus; and
a transmitter configured to transmit the measurement parameter, wherein
the processor includes a threshold in the measurement parameter, and
the threshold is a threshold for causing the terminal apparatus to determine whether to measure a reference signal received power of some or all of measurement objects based on the reference signal received power of the relay terminal apparatus and the threshold.

4. A method applied to a terminal apparatus for communicating with a base station apparatus via a relay terminal apparatus, the method comprising:
receiving a measurement parameter configured by the base station apparatus;
measuring a reference signal received power of one or more measurement objects based on the measurement parameter;
generating a measurement report message based on the measured reference signal received power; and
transmitting the measurement report message to the base station apparatus via the relay terminal apparatus, wherein
whether to measure the reference signal received power of some or all of the one or more measurement objects is determined based on a reference signal received power of the relay terminal apparatus and a threshold included in the measurement parameter.

5. An integrated circuit implemented in a terminal apparatus for communicating with a base station apparatus via a relay terminal apparatus, the integrated circuit causing the terminal apparatus to perform:
receiving a measurement parameter configured by the base station apparatus;
measuring a reference signal received power of one or more measurement objects based on the measurement parameter;
generating a measurement report message based on the measured reference signal received power; and
transmitting the measurement report message to the base station apparatus via the relay terminal apparatus, wherein
whether to measure the reference signal received power of some or all of the one or more measurement objects is determined based on a reference signal received power of the relay terminal apparatus and a threshold included in the measurement parameter.
